# EUROPEAN PATENT SPECIFICATION

(11) **EP 1 640 580 B1**
(45) Date of publication and mention of the grant of the patent: **04.04.2012**
(21) Application number: 05020927.9
(22) Date of filing: 26.09.2005
(51) Int. Cl.: F01N 3/28, F01N 3/08, F01N 3/20, F01N 3/025, F02D 13/02, F02D 9/06, F01L 13/00, F01L 9/04, F01L 1/18, F01L 1/26

(54) **Fuel reforming method and fuel reforming device of internal combustion engine**
Verfahren und Vorrichtung zur Reformierung von Brennstoff in einer Brennkraftmaschine
Méthode et appareil pour le reformage de combustible dans un moteur à combustion interne

(30) Priority: 27.09.2004 JP 2004279995
(43) Date of publication of application: 29.03.2006
(73) Proprietor: Toyota Jidosha Kabushiki Kaisha, Toyota-shi, Aichi-ken, 471-8571 (JP)
(72) Inventor: Nakatani, Koichiro, Toyota-shi Aichi-ken, 471-8571 (JP)
(74) Representative: TBK

(56) References cited:
- EP-A2- 1 211 394
- WO-A-03/048536
- US-A- 5 293 741

## Description

### BACKGROUND OF THE INVENTION

### Field of the Invention

The present invention relates to a fuel reforming method and a fuel reforming device of an internal combustion engine.

### Description of the Related Art

There has been known a device in which the amounts of fuel and air supplied to a fuel reforming device having a reforming catalyst at the time of a detachment deoxidization process of NOₓ trapped in an NOₓ trap are regulated and in which a reforming gas generated in this fuel reforming device is introduced into the NOₓ trap as a reducing agent (refer to WO 03/048536 A1 and Japanese Patent Application Laid-Open (JP-A) No. 2001-254640). As a temperature increase of an exhaust purifying catalyst is an object in the field of internal combustion engines, there has been known a device in which an exhaust valve is opened after a fuel-air mixture ignition and before an expansion process completion so that a high temperature exhaust is supplied to a catalyst (refer to JP-A No. 2000-170556). Other than these, JP-A Nos. 09-21362, 2003-83032, 2003-74395 and US 5,293,741 A exist as prior art references related to the present invention.

In a conventional device, a fuel reforming mechanism such as an air pump which supplies air to a reforming catalyst at the time of fuel reforming is separately necessary. Although the reforming catalyst exhibits fuel reforming characteristics in a temperature range in which fuel is appropriately reformed, there is a possibility that the temperature of the reforming catalyst is not increased up to this temperature range by heat of exhaust gas after fuel is burnt. Thus, there is a risk that the energy efficiency of an internal combustion engine is deteriorated due to energy employed for the temperature increased of the reforming catalyst to this temperature range so that the fuel efficiency is deteriorated.

### SUMMARY OF THE INVENTION

Thus, an object of the present invention is to provide fuel reforming methods and fuel reforming devices of an internal combustion engine capable of reforming fuel and capable of reducing energy employed at the time of fuel reforming though it has a simple equipment configuration.

In one aspect of the present invention, there is provided a fuel reforming method of an internal combustion engine in which fuel is supplied to a reforming catalyst provided on an exhaust path so that the fuel is reformed to a reforming gas: comprising a discharging step in which fuel supplied into a cylinder and whose temperature is increased by a compression process is discharged by opening an exhaust valve before the fuel is burnt; and a reforming step in which the discharged fuel is introduced to the reforming catalyst.

With the fuel reforming method described above, since fuel whose temperature is increased in a cylinder in a compression process is introduced into a reforming catalyst before this fuel is burnt, fuel having a temperature and a pressure higher than those of exhaust can be supplied to the reforming catalyst. Thus, energy employed for increasing the temperature of the reforming catalyst can be reduced.

The fuel reforming method of the internal combustion engine according to the present invention may comprise a fuel supplying step in which fuel is supplied to the cylinder such that an appropriate amount of fuel by which the reforming catalyst exhibits a fuel reforming characteristic is discharged from the cylinder in the discharging step. By supplying fuel to the cylinder in such a way, fuel can be reformed appropriately by the reforming catalyst at the time of the reforming step.

In one embodiment of the fuel reforming method of the internal combustion engine according to the present invention, the discharging step may be executed when the internal combustion engine is operated at a low load at which a required torque required at the internal combustion engine becomes approximately zero. Since fuel before being burnt is discharged from the cylinder in the exhaust process, output cannot be obtained from this cylinder. Thus, when the internal combustion engine is operated at a low load, the exhaust process is executed, and influence to the operation condition of the internal combustion engine due to the output decrease is restrained.

In another embodiment of the fuel reforming method of the internal combustion engine according to the present invention, the discharging step may be executed at the time of speed reduction of the internal combustion engine. By executing the exhaust process at the time of speed reduction of the internal combustion engine, influence to the operation condition of the internal combustion engine due to the output decrease can be restrained. Further, due to the output decrease by this exhaust process, speed reduction of the internal combustion engine can be facilitated.

In a further embodiment of the fuel reforming method of the internal combustion engine according to the present invention, the function of an exhaust purifying catalyst provided on the exhaust path downstream of the reforming catalyst is recovered by a rich spike operation in which an air-to-fuel ratio of exhaust is temporarily set to a rich side by introducing the reforming gas into the exhaust purifying catalyst. By introducing the reforming gas to the exhaust purifying catalyst, the rich spike which is effective to the exhaust purifying catalyst can be performed.

In yet another embodiment of the fuel reforming method of the internal combustion engine according to the present invention, a storing step in which the reforming gas is stored by storing means at the time of the reforming step and a reforming gas supplying step in which the reforming gas is supplied from the storing means to the exhaust purifying catalyst at the time of the rich spike may be comprised. In this case, when there is no impediment in the operation condition of the internal combustion engine, the exhaust process and reforming process are executed so that the reforming gas can be stored in the storing means. Thus, influence to the operation condition of the internal combustion engine by the exhaust process can be restrained further. Further, since the rich spike is executed employing the reforming gas stored in the storing means, the rich spike can be executed for the exhaust purifying catalyst at an appropriate time.

In another embodiment of the fuel reforming method of the internal combustion engine according to the present invention, the function of the exhaust purifying catalyst may be recovered by a particle material removal operation in which the temperature of the exhaust purifying catalyst is increased to a temperature range in which a particle material adhering to the exhaust purifying catalyst is oxidized and removed by supplying the reforming gas from the storing means to the exhaust purifying catalyst may be comprised. When fuel is supplied to the exhaust purifying catalyst to execute a particle material removal operation, there is a risk that oxidization reaction does not occur on a place adjacent to a front end surface of the exhaust purifying catalyst (a portion upstream of exhaust flow) and that reaction occurs on a portion downstream of the exhaust purifying catalyst so that a temperature distribution occurs in the exhaust purifying catalyst. Meanwhile, since the reforming gas has a high reactability compared with fuel and react quickly in the exhaust purifying catalyst, the temperature of the exhaust purifying catalyst can be increased from a place adjacent to the front end surface thereof. Thus, a temperature distribution of the exhaust purifying catalyst during the temperature increase operation can be restrained. Since the reforming gas having a high reactability is employed, even when the temperature of exhaust gas discharged from the internal combustion engine is low, the temperature of the exhaust purifying catalyst can be increased to a temperature range in which a particle material is oxidized and removed.

In a further embodiment of the fuel reforming method of the internal combustion engine according to the present invention, the particle material removal operation may comprise a temperature increasing step in which the reforming gas is supplied from the storing means to the exhaust purifying catalyst and thereafter fuel is added to the exhaust purifying catalyst by the fuel addition means may be comprised. By supplying first the reforming gas to the exhaust purifying catalyst, the temperature of an upstream side portion of the exhaust purifying catalyst can be increased. Since this upstream side portion reacts even by fuel having a low reactability after the temperature of the exhaust purifying catalyst is increased, the function of the exhaust purifying catalyst can be recovered while occurrence of a temperature distribution of the exhaust purifying catalyst is restrained.

In yet another embodiment of the fuel reforming method of the internal combustion engine according to the present invention, the supply amount of the reforming gas supplied from the storing means may be decreased at the time of fuel supply, and the addition amount of fuel added to the exhaust purifying catalyst may be increased in accordance with the decrease of the supply amount of the reforming gas. By increasing the temperature of the exhaust purifying catalyst by the reforming gas and then increasing the fuel addition amount while decreasing the supply amount of the reforming gas, it is possible to shift a temperature increase due to the reforming gas to a temperature increase due to the fuel gradually. Thus, since a rapid temperature change of the exhaust purifying catalyst can be restrained, occurrence of a temperature distribution can be further restrained.

In another embodiment of the fuel reforming method of the internal combustion engine according to the present invention, the particle material removal operation may comprise a temperature increasing step in which fuel is added to the exhaust purifying catalyst to increase the temperature thereof, and a temperature regulation step in which the reforming gas is supplied from the storing means to a place of the exhaust purifying catalyst whose temperature is low in order to restrain a temperature distribution of the exhaust purifying catalyst. When the temperature of exhaust flowing into the exhaust purifying catalyst is low at the time of temperature increase of the exhaust purifying catalyst by fuel, there is a risk that the temperature of an upstream portion of the exhaust purifying catalyst is decreased. When the amount of heat radiation from the exhaust purifying catalyst is large at the time of temperature increase, there is a risk that the temperatures of outer peripheral portions of the exhaust purifying catalyst are decreased. Thus, when such low temperature places are generated, the reforming gas having a high reactability is supplied to these places to increase the temperature thereof. Thus, a temperature distribution of the exhaust purifying catalyst can be restrained.

In a further embodiment of the fuel reforming method of the internal combustion engine according to the present invention, the particle material removal operation may comprise a temperature increasing step in which the reforming gas stored in the storing means and fuel added by the fuel addition means are supplied to the exhaust purifying catalyst to increase the temperature thereof, and a supply amount regulation step in which the lower the temperature of exhaust flowing into the exhaust purifying catalyst at the time of the temperature increasing step, the more the amount of the reforming gas supplied to the exhaust purifying catalyst is increased. The lower the temperature of exhaust flowing into the exhaust purifying catalyst, the more the temperature of the upstream portion of the exhaust purifying catalyst is decreased. Thus, the lower the temperature of exhaust, the more the supply amount of the reforming gas to the exhaust purifying catalyst is increased to restrain the decrease of the temperature of the upstream side portion of the exhaust purifying catalyst. Thus, a temperature distribution of the exhaust purifying catalyst can be restrained.

In yet another embodiment of the fuel reforming method of the internal combustion engine according to the present invention, the particle material removal operation may comprise a temperature increasing step in which the reforming gas stored in the storing means and fuel added by the fuel addition means are supplied to the exhaust purifying catalyst to increase the temperature thereof, and a supply amount regulation step in which the higher the space velocity in the exhaust purifying catalyst at the time of the temperature increasing step, the more the amount of the reforming gas supplied to the exhaust purifying catalyst is increased. Since the higher the space velocity (SV) in the exhaust purifying catalyst, the more the reaction rate in the exhaust purifying catalyst is decreased, the temperature of the upstream side portion of the exhaust purifying catalyst tends to be decreased, and a temperature distribution tends to occur. Thus, the higher the SV, the more the amount of the reforming gas having a high reactability is increased to restrain the occurrence of the temperature distribution of the exhaust purifying catalyst. The space velocity (SV) in the present invention means the volume of gas passing the catalyst per hour.

In another embodiment of the fuel reforming method of the internal combustion engine according to the present invention, the particle material removal operation may comprise a temperature increasing step in which a fixed flow volume of the reforming gas may be supplied from the storing means to the exhaust purifying catalyst, and a temperature regulation step in which fuel is added from a fuel supplying system of the internal combustion engine to the exhaust purifying catalyst such that a temperature distribution of the exhaust purifying catalyst is restrained. The constituent of the reforming gas changes by the temperature of the reforming catalyst at the time of fuel reforming, by an activation state, and by a deterioration condition of the reforming catalyst. Thus, a fixed flow volume of reforming gas whose constituent is unstable but which has a high reactability is supplied to the exhaust purifying catalyst to increase the temperature of the upstream side portion of the exhaust purifying catalyst, and a temperature distribution generated by this temperature increase is restrained by fuel whose characteristics are stable. By regulating the temperature of the exhaust purifying catalyst by fuel whose characteristics are stable, the amount of fuel which should be added to the exhaust purifying catalyst can be easy to be estimated. Thus, temperature regulation can be executed appropriately.

In another aspect of the present invention, there is provided a fuel reforming device of an internal combustion engine in which a reforming catalyst for reforming fuel to a reforming gas is provided on an exhaust path, comprising valve opening means capable of opening an exhaust valve at a time other than an exhaust process time; and operation control means for controlling the operation of the valve opening means to open the exhaust valve in order to allow fuel which is supplied to a cylinder and whose temperature is increased by a compression process to be introduced into the reforming catalyst before the fuel is burnt.

With the fuel reforming device described above, since the exhaust valve is opened so that fuel whose temperature is increased by a compression process is introduced into a reforming catalyst before this fuel is burnt, similarly to the above-described fuel reforming method of the present invention, fuel having a temperature and a pressure higher than those of exhaust can be supplied to the reforming catalyst. Further, with this fuel reforming device, by allowing a valve opening means to be provided, fuel having a high temperature and a high pressure can be introduced to the reforming catalyst, so that fuel can be reformed in a simple equipment structure.

In one embodiment of the fuel reforming device of the internal combustion engine according the present invention there are provided, fuel supplying means for supplying fuel to the cylinder, wherein the operation control means is adapted to regulate the amount of fuel supplied the fuel supplying means to the cylinder such that an appropriate amount of fuel by which the reforming catalyst exhibits a fuel reforming characteristic is introduced from the cylinder into the reforming catalyst at the time of valve opening of the exhaust valve by the valve opening means. By regulating the fuel amount supplied to the cylinder, fuel can be reformed appropriately in the reforming catalyst.

In another embodiment of the fuel reforming device of the internal combustion engine according to the present invention, the operation control means may be adapted to control the operation of the valve opening means when the internal combustion engine is operated at a low load at which a required torque required at the internal combustion engine becomes approximately zero so that fuel whose temperature is increased in the compression process is introduced into the reforming catalyst, and the operation control means may be adapted to control the operation of the valve opening means at a time of speed reduction of the internal combustion engine so that fuel whose temperature is increased in the compression process is introduced into the reforming catalyst. By allowing fuel before being burnt to be discharged at such time, influence to the operation condition of the internal combustion engine can be restrained. At the time of speed reduction, speed reduction of the internal combustion engine can be facilitated.

In a further embodiment of the fuel reforming device of the internal combustion engine according to the present invention, an exhaust purifying catalyst whose function may be recovered by a rich spike operation in which an air-to-fuel ratio of exhaust is temporarily set to a rich side is provided on the exhaust path downstream of the reforming catalyst, and the operation control means be adapted to effect the rich spike operation by supplying the reforming gas to the exhaust purifying catalyst. With this aspect, a rich spike which is effective to the exhaust purifying catalyst can be executed by the reforming gas.

In yet another embodiment of the fuel reforming device of the internal combustion engine according to the present invention, storing means for storing the reforming gas, leading means for introducing the reforming gas into the storing means, and supplying means for supplying the reforming gas stored in the storing means to the exhaust purifying catalyst may be comprised, and the operation control means may be adapted to control the operation of the supplying means such that the reforming gas is supplied from the storing means to the exhaust purifying catalyst at the time of the rich spike. With this aspect, when there is no impediment in the operation condition of the internal combustion engine, the reforming gas can be stored in the storing means, and by employing the reforming gas stored in this storing means, the rich spike can be executed. Thus, influence to the operation condition of the internal combustion engine can be restrained, and the rich spike can be executed for the exhaust purifying catalyst at an appropriate time.

In another embodiment of the fuel reforming device of the internal combustion engine according to the present invention, the function of the exhaust purifying catalyst may be recovered by a particle material removal operation in which the temperature of the exhaust purifying catalyst is increased to a temperature range in which a particle material adhering to the exhaust purifying catalyst is oxidized and removed, and the operation control means may be adapted to effect the particle material removal operation by supplying the reforming gas from the storing means to the exhaust purifying catalyst. With this aspect, since the particle material removal operation of the exhaust purifying catalyst is executed employing the reforming gas, a temperature distribution of the exhaust purifying catalyst can be restrained.

In a further embodiment of the fuel reforming device of the internal combustion engine according to the present invention, fuel addition means for adding fuel to the exhaust purifying catalyst from a fuel supplying system of the internal combustion engine may be comprised, and the operation control means may control the operation of the supplying means at the time of the particle material removal operation for the exhaust purifying catalyst so that the reforming gas is supplied from the storing means to the exhaust purifying catalyst and thereafter control the operation of the fuel addition means so that fuel is added to the exhaust purifying catalyst. Further, the operation control means may control the operation of the supplying means such that the supply amount of the reforming gas supplied from the storing means to the exhaust purifying catalyst is decreased at the time of fuel supply, and may control the operation of the fuel addition means such that the addition amount of fuel added to the exhaust purifying catalyst is increased in accordance with the decrease of the reforming gas. By supplying the reforming gas and fuel to the exhaust purifying catalyst in such a way, occurrence of a temperature distribution of the exhaust purifying catalyst can be restrained.

In yet another embodiment of the fuel reforming device of the internal combustion engine according to the present invention, fuel addition means for adding fuel to the exhaust purifying catalyst from a fuel supplying system of the internal combustion engine may be provided, and the operation control means may control the operation of the fuel addition means at the time of the particle material removal operation of the exhaust purifying catalyst to add fuel to the exhaust purifying catalyst, and may control the operation of the supplying means such that a temperature distribution of the exhaust purifying catalyst is restrained at the time of the particle material removal operation to supply the reforming gas from the storing means to a place of the exhaust purifying catalyst whose temperature is low. By supplying the reforming gas with a high reactability to a place of the exhaust purifying catalyst whose temperature is low, a temperature distribution of the exhaust purifying catalyst can be restrained.

In another embodiment of the fuel reforming device of the internal combustion engine according to the present invention, fuel addition means for adding fuel to the exhaust purifying catalyst from a fuel supplying system of the internal combustion engine may be provided, the operation control means may control the operations of the fuel additionmeans and the supplyingmeans such that fuel and reforming gas are respectively supplied to the exhaust purifying catalyst at the time of particle material removal operation of the exhaust purifying catalyst, and may control the operation of the supplying means such that the lower the temperature of exhaust flowing into the exhaust purifying catalyst, the more the supply amount of the reforming gas is increased. Further, the function of the exhaust purifying catalyst may be recovered by controlling the operations of the fuel addition means and the supplying means such that fuel and reforming gas are respectively supplied to the exhaust purifying catalyst at the time of the particle material removal operation of the exhaust purifying catalyst, and the operation control means may control the operation of the supplying means such that the higher the space velocity in the exhaust purifying catalyst at the time of the particle material removal operation, the more the supply amount of the reforming gas is increased. When fuel and the reforming gas are supplied in this way to increase the temperature of the exhaust purifying catalyst, by changing the supply amount of the reforming gas in accordance with the exhaust temperature and the space velocity, a temperature distribution of the exhaust purifying catalyst at the time of particle material removal operation can be restrained.

In a further embodiment of the fuel reforming device of the internal combustion engine according to the present invention, fuel addition means for adding fuel to the exhaust purifying catalyst from a fuel supplying system of the internal combustion engine may be comprised, the operation control means may control the operation of the supplying means such that a fixed flow volume of the reforming gas is supplied from the storing means to the exhaust purifying catalyst at the time of the particle material removal operation of the exhaust purifying catalyst, and may control the operation of the fuel addition means to add fuel such that a temperature distribution of the exhaust purifying catalyst is restrained at the time of the particle material removal operation. With this aspect, since the temperature regulation of the exhaust purifying catalyst is executed by fuel with stable characteristics, it is easy to estimate the fuel amount necessary for regulating the temperature. Thus, the temperature regulation can be executed appropriately.

In yet another embodiment of the fuel reforming device of the internal combustion engine according to the present invention, a bypass path bypassing the reforming catalyst and valve means capable of switching the flow of gas discharged from a cylinder of the internal combustion engine between the reforming catalyst and the bypass path may be comprised, and the operation control means may be adapted to control the operation of the valve means such that gas discharged from the cylinder is introduced into the bypass path at the time other than the time when the exhaust valve is opened by the valve opening means. Deterioration of catalyst is facilitated when the A/F ratio is lean and the temperature is high. With this aspect, since gas discharged from the cylinder is introduced into the bypass path at the time other than the time when the exhaust valve is opened by the valve opening means, inflow of gas (exhaust) discharged from the cylinder to the reforming catalyst at the time other than this time can be restrained. Thus, deterioration of the reforming catalyst can be restrained.

In another embodiment of the fuel reforming device of the internal combustion engine according to the present invention, the internal combustion engine may have four cylinders, the exhaust path may have branched portions which branch off for each cylinder of the internal combustion engine, and the reforming catalyst maybe arranged on the branched portion of anyone cylinder among the four cylinders. By arranging the reforming catalyst only on the branched portion of any one cylinder among four cylinders, even when the A/F ratio of this one cylinder is made rich at the time of valve opening of the exhaust valve by the valve opening means, by allowing the A/F ratio of cylinders other than this cylinder to be lean, the A/F ratio of exhaust can be allowed to approach a theoretical A/F ratio. Since the amount of oxygen in exhaust can be increased by allowing the A/F ratio of exhaust to approach a theoretical A/F ratio, the amount of hydrocarbon (HC) discharged downstream of catalyst can be restrained compared to a case where the A/F ratio of exhaust is thick at the time of rich spike (the A/F ratio is rich, and the oxygen amount is small) . Further, at the time of temperature increase operation of the exhaust purifying catalyst, the temperature can be allowed to reach a target temperature range of the temperature increase operation time quickly by less fuel.

In further embodiment of the fuel reforming device of the internal combustion engine according to the present invention, the internal combustion engine may have six or eight cylinders, the exhaust path may have branched portions which branch off for each cylinder of the internal combustion engine, and the reforming catalyst may be arranged on the branched portions of any two cylinders among the six or eight cylinders. In a case of an internal combustion engine having six or eight cylinders, by arranging the reforming catalyst in such a way, the A/F ratio of exhaust at the time of valve opening of the exhaust valve by the valve opening means can be allowed to approach a theoretical A/F ratio.

In yet another embodiment of the fuel reforming device of the internal combustion engine according to the present invention, the internal combustion engine may have a plurality of cylinders, the exhaust path may have branched portions which branch off for each cylinder of the internal combustion engine, the reforming catalyst may be arranged on each of the branched portions, and the operation control means may be adapted to control the operation of the valve opening means to open the exhaust valve such that fuel whose temperature is increased in the compression process is introduced into the reforming catalyst before the fuel is burnt at a rate of one time per three times or one time per four times of the compression process execution of the internal combustion engine. When the reforming catalyst is arranged on the branched portion of each cylinder of the internal combustion engine, by setting the ratio at which the exhaust valve is opened by the valve opening means in such a way, the A/F ratio of exhaust can be allowed to approach a theoretical A/F ratio.

As described above, with the present invention, since the exhaust valve is opened so that fuel whose temperature is increased by a compression process is introduced into a reforming catalyst before this fuel is burnt, fuel having a temperature and a pressure higher than those of exhaust can be supplied to the reforming catalyst. Thus, energy employed for increasing the temperature of the reforming catalyst can be reduced at the time of fuel reforming. Accordingly, energy efficiency of the internal combustion engine is improved, and deterioration in fuel efficiency can be restrained. By comprising the valve opening means capable of opening the exhaust valve at the time other than the exhaust process, since fuel having a high temperature and a high pressure can be supplied to the reforming catalyst, fuel can be reformed in a simple equipment structure.

### BRIEF DESCRIPTION OF THE DRAWINGS

FIG. 1 is a view showing an engine in which a fuel reforming device according to a first embodiment of the present invention is incorporated.
FIGS. 2A and 2B are enlarged views of the valve gear of FIG. 1.
FIG. 3 is a flow chart showing an exhaust valve operation control routine that an ECU of FIG. 1 executes.
FIG. 4 is a view showing a modification example of the first embodiment of the present invention.
FIG. 5 is a view showing an engine in which a fuel reforming device according to a second embodiment of the present invention is incorporated.
FIG. 6 is a flow chart showing a gas flow control routine that the ECU of FIG. 5 executes.
FIG. 7 is a flow chart showing a modification example of the gas flow control routine.
FIG. 8 is a view showing a first modification example of the second embodiment of the present invention.
FIG. 9 is a flow chart showing a PM recovery control routine that the ECU of FIG. 8 executes.
FIG. 10 is a view showing one example of a relationship between a reforming gas supply amount and time and a relationship between a fuel supply amount and time at the time of a PM recovery.
FIG. 11 is a view showing one example of a relationship between an exhaust purifying catalyst inflow gas temperature and a reforming gas supply amount at the time of the PM recovery.
FIG. 12 is a view showing one example of time changes of an upstream side temperature and a downstream side temperature of an exhaust purifying catalyst at the time of the PM recovery.
FIGS. 13A and 13B are views showing a first modification example in which a supply path for supplying a reforming gas to the exhaust purifying catalyst is provided.
FIG. 14 is a view showing a second modification example of the second embodiment of the present invention.
FIGS. 15A to 15C are views showing gas flows in the second modification example of FIGS. 13A and 13B, wherein FIG. 15A shows a gas flow of a case where a three-way valve is switched to a storage position, FIG. 15B a gas flow of a case where the three-way valve is switched to a discharge position, and FIG. 15C a gas flow of a case where the three-way valve is switched to a hold position.
FIG. 16 is a view showing an engine in which a fuel reforming device according to a third embodiment of the present invention is incorporated.
FIG. 17 is a flow chart showing a switching valve operation control routine that the ECU of FIGS. 15A to 15C executes.
FIGS. 18A and 18B are views showing a modification example of the third embodiment of the present invention.
FIG. 19 is a view showing another modification example of the third embodiment of the present invention.
FIG. 20 is a view showing first another aspect of the valve gear.
FIG. 21 is a view showing second another aspect of the valve gear.

### DETAILED DESCRIPTION OF THE EMBODIMENTS

### (First Embodiment)

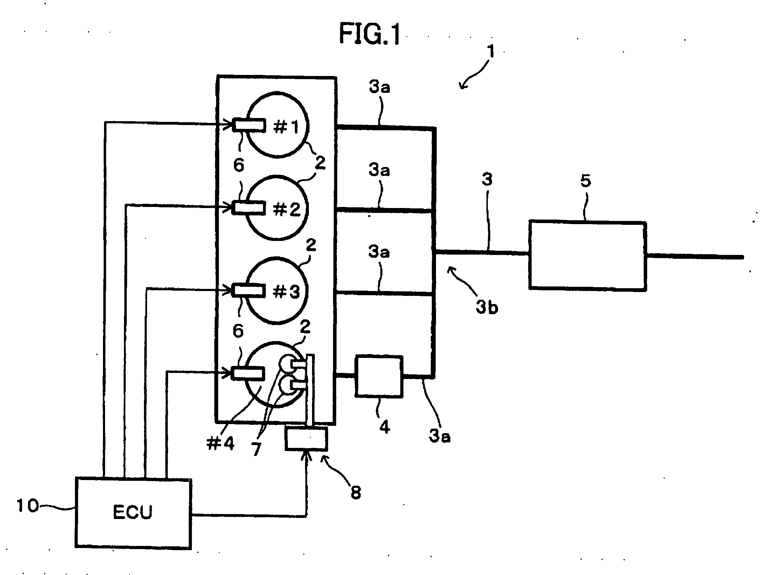

FIG. 1 shows one embodiment of a diesel engine 1 as an internal combustion engine in which a fuel reforming device of the present invention is incorporated. The engine 1 is loaded in a vehicle as a power source for traveling, and an exhaust path 3 is coupled with its respective cylinders 2 (four cylinders of #1 to #4 in FIG. 1). The exhaust path 3 is provided with a plurality (four in FIG. 1) of branched portions 3a which branch off for each cylinder 2 and a gathering portion 3b at which these branched portions 3a gather. The branched portions 3a include for example an exhaust port of the engine 1 and a branched pipe which is coupled with the exhaust port of each cylinder 2 of an exhaust manifold. As shown in FIG. 1, a reforming catalyst 4 and an exhaust purifying catalyst 5 are provided on one portion of the branched portions 3a and on the exhaust path 3 downstream of the gathering portion 3b, respectively. As the exhaust purifying catalyst 5, for example, a filter base material, for capturing particulates and carrying an occlusion deoxidization type NOₓ catalyst, is provided. Each cylinder 2 is provided with an injector 6 as fuel supplying means for supplying fuel to each cylinder 2 and exhaust valves 7. The exhaust valves 7 of each cylinder 2 are driven for opening/closing by a valve gear 8. FIG. 1 shows only the valve gear 8 of the cylinder 2 (the cylinder of #4) on which the reforming catalyst 4 is provided on the branched portion 3a.

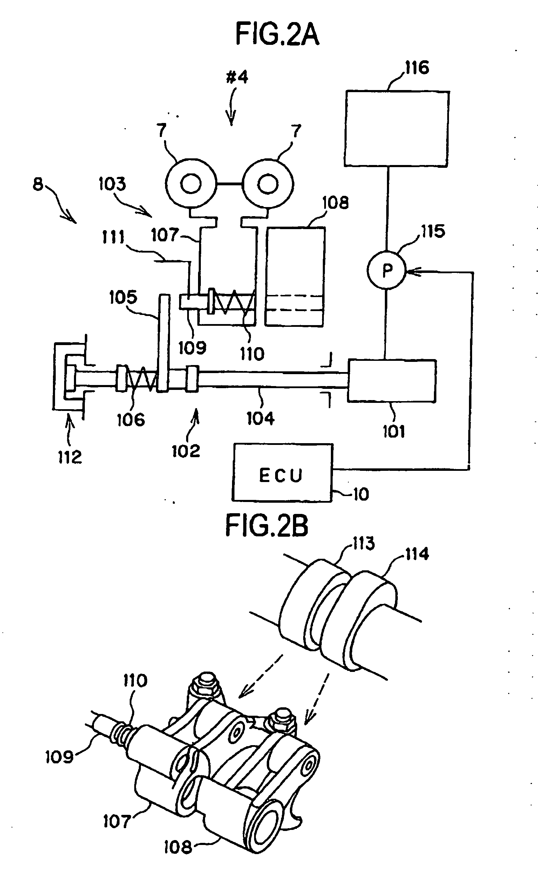

FIGS. 2A and 2B are enlarged views of the valve gear 8. FIG. 2A shows a schematic block diagram of the valve gear 8, and FIG. 2B shows a detailed view of a cam and the like for driving the exhaust valves 7. The valve gear 8 is provided with a hydraulic actuator 101, a drive mechanism 102 driven by the hydraulic actuator 101, and an operating section 103 operated by the drive mechanism 102. The drive mechanism 102 is provided with a control rod 104 coupled with the hydraulic actuator 101, a control plate 105 attached to the control rod 104, and a spring 106 for urging the control plate 105 to the right side of FIG. 2A. The operating section 103 is provided with a normal use locker arm 107, a forced valve opening locker arm 108, a lock pin 109 which is pressed and moved by the control plate 105, and a lock pin return spring 110 urging the lock pin 109 to the left side of FIG. 2A. A timing control mechanism 111 which regulates timing for activating the lock pin 109 is provided on the lock pin 109. The lock pin 109 is pressed and moved by the control plate 105 so that the normal use locker arm 107 and the forced valve opening locker arm 108 are coupled. A stopper 112 is provided on the opposite side of a side where the control rod 104 is coupled with the hydraulic actuator 101. As shown in the detailed view of FIG. 2B, a normal use cam 113 and a forced valve opening cam 114 abut on the normal use locker arm 107 and the forced valve opening locker arm 108, respectively. A nose is provided on the normal use cam 113 so as to open the exhaust valve 7 at a predetermined timing at the time of an exhaust process of the cylinder 2 of #4. Meanwhile, a nose is provided on the forced valve opening cam 114 so as to open the exhaust valve 7 at a predetermined timing at the time of a compression process of the cylinder 2 of #4. Since the predetermined timing at which the exhaust valve 7 is opened at the time of the exhaust process by the normal use cam 113 can be a well known timing at which the engine 1 is driven appropriately, detailed explanation thereof will be omitted. Meanwhile, as the predetermined timing at which the exhaust valve 7 is opened at the time of the compression process by the forced valve opening cam 114, a timing is set at which fuel which is supplied to the cylinder 2 and whose temperature is increased by the compression process can be discharged to the exhaust path 3 before this fuel is burnt. The hydraulic actuator 101 is driven by hydraulic fluid which is supplied from a hydraulic tank 116 by a hydraulic pump 115.

Next, one example of the operation of the valve gear 8 will be described.

In the valve gear 8 of FIGS. 2A and 2B, normally the lock pin 109 is at the position shown in FIG. 2A, and the normal use locker arm 107 and the forced valve opening locker arm 108 are not coupled. Thus, only the rotation of the normal use cam 113 is transmitted to the exhaust valve 7 via the normal use locker arm 107. Accordingly, the exhaust valve 2 is driven to be opened or closed at the predetermined timing so that exhaust is discharged at the time of the exhaust process. Since this opening/closing operation of the exhaust valve 7 is similar to that of well know, detailed explanation thereof will be omitted. Meanwhile, when the lock pin 109 is pressed and moved to the right side of FIG. 2A by the hydraulic actuator 101, the normal use locker arm 107 and the forced valve opening locker arm 108 are coupled. At the time of the locker arm coupling, the operation of the forced valve opening cam 114 is also transmitted to the exhaust valve 7. Thus, the exhaust valve 7 is opened at the above-described predetermined timing of the compression process time of the cylinder 2. In this manner, by allowing the exhaust valve 7 to be opened at the time other than the exhaust process time, the valve gear 8 functions as valve opening means of the present invention.

The occlusion deoxidization type NOₓ catalyst carried buy the exhaust purifying catalyst 5 absorbs NOₓ at the time the air-to-fuel ratio of the exhaust is lean, and discharges occluded NOₓ at the time when oxygen density of the exhaust is decreased. Thus, before the volume of NOₓ occluded in the exhaust purifying catalyst 5 reaches the saturation, a reducing agent is supplied so that the air-to-fuel ratio of the exhaust is set at a rich side (rich spike) temporarily. Thus, NOₓ occluded in the exhaust purifying catalyst 5 is discharged and is deoxidized (NOₓ deoxidization) to N₂ so that the function of the exhaust purifying catalyst 5 is recovered. As the reducing agent, for example, a fuel, a reforming gas obtained by reforming a fuel (e.g., hydrogen (H), carbon monoxide (CO), etc.), or the like is employed. The reforming of fuel to a reforming gas is performed by the reforming catalyst 4. The reforming catalyst 4 has an A/F ratio (e.g., of the order of A/F=5) and a temperature range (e.g., 600 ° degree. C. or greater) at or in which it exhibits fuel reforming characteristics, and at and in such A/F ratio and temperature range, fuel is reformed appropriately.

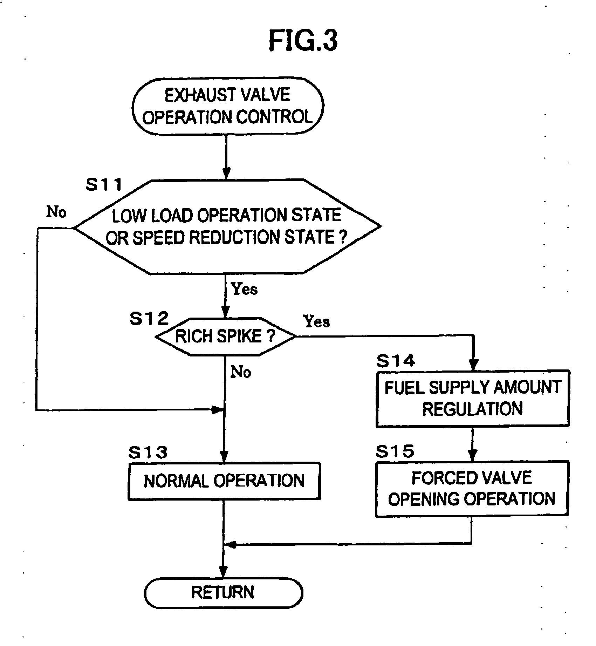

The operation of the valve gear 8 (the operation of the hydraulic pump 115) is controlled by an engine control unit (ECU) 10. The ECU 10 is a well known computer unit which controls the operations of the injectors 6 to regulate the amount of fuel supplied to the cylinders 2 so that the operation condition of the engine 1 is controlled. The ECU 10 controls the operation of the valve gear 8 so that fuel is reformed to a reforming gas at the time of the rich spike. FIG. 3 is a flow chart showing an exhaust valve operation control routine that the ECU 10 executes in order to control the operation of the valve gear 8 at the time of fuel reforming. By executing the control routine of FIG. 3, the ECU 10 functions as operation control means of the present invention. The control routine of FIG. 3 is repeatedly executed at a predetermined cycle during the operation of the engine 1.

In the control routine of FIG. 3, first, the ECU 10 determines whether the engine 1 is in a low load operation state or in a speed reduction state in step S11. Whether the engine 1 is in the low load operation state or in the speed reduction state is for example may be determined by referring to an output signal of an engine rotation angle sensor (not shown) , ormaybe determined by referring to the amount of inhalation air, the amount of fuel supply, or the like to estimate the operation condition of the engine 1. In the present invention, low load means a case where a required torque required for the engine 1 is approximately zero. As such a low load operation, for example, an idling operation or the like is set. The speed reduction operation of the engine 1 includes a fuel cut (F/C) speed reduction operation in which fuel supplied to the engine 1 is cut. If it is determined that the engine 1 is not in the low load operation state or the speed reduction state, step S12 is skipped, proceeding to step S13. Meanwhile, if it is determined that the engine 1 is in the low load operation state or the speed reduction state, the process proceeds to step S12, and the ECU 10 determines whether it is the time when the rich spike should be executed or not. The ECU 10 refers to the amounts of the fuel and inhalation air supplied to the engine 1 in another routine to estimate the amount of NOₓ flowing into the exhaust purifying catalyst 5, and totals this estimated amount of NOₓ to estimate the amount of NOₓ occluded in the exhaust purifying catalyst 5. The rich spike is executed when it is determined that the total value of this amount of NOₓ is a predetermined value or greater. As the predetermines value, for example, the amount of NOₓ at which the exhaust purifying characteristics of the exhaust purifying catalyst 5 begin to deteriorate is set. If it is determined that it is not time when the rich spike should be executed, the process proceeds to step S13, and the ECU 10 controls the operation of the hydraulic pump 115 to change the position of the lock pin 109 in order not to allow the normal use locker arm 107 and the forced valve opening locker arm 108 to be coupled. That is, the operation of the valve gear 8 is controlled such that the exhaust valve 7 performs a normal operation in which the exhaust valve 7 is driven to be opened at the exhaust process time. Thereafter, the control routine of this time is completed.

Meanwhile, if it is determined that it is time to execute the rich spike, the process proceeds to step S14, and the ECU 10 controls the operation of the injector 6 such that the A/F ratio in the cylinder 2 of #4 is regulated to be a predetermined A/Fratio (e.g., of the order of A/F=5) where the reforming catalyst 4 exhibits fuel reforming characteristics,whereby an appropriate amount of fuel is supplied to the cylinder 2. In the following step S15, the ECU 10 controls the operation of the hydraulic pump 115 to change the position of the lock pin 109 such that the normal use locker arm 107 and the forced valve opening locker arm 108 are coupled. That is, the ECU 10 controls the operation of the valve gear 8 such that the exhaust valve 7 performs a forced valve opening operation in which the exhaust valve 7 is opened at the predetermined timing of the compression process time. Thereafter, the control routine of this time is completed.

In the control routine of FIG. 3, when the rich spike is executed for the exhaust purifying catalyst 5, since the exhaust valve 7 of #4 is opened at the predetermined timing of the compression process time by the valve gear 8, fuel which is one obtained before its temperature is increased by the compression process and before it is burnt can be supplied to the reforming catalyst 4. An appropriate amount of fuel by which the reforming catalyst 4 exhibits fuel reforming characteristics is discharged from the cylinder 2. Thus, fuel can be reformed appropriately in the reforming catalyst 4. Since fuel whose temperature is increased to a temperature higher than that of the exhaust by the compression process is introduced into the reforming catalyst 4, the energy to increase the temperature of the reforming catalyst 4 can be reduced. The time to close the exhaust valve 7 which is opened at step S15 is set for example at a time when fuel which has been supplied to the cylinder 2 in step S14 is discharged almost all amount. The predetermined timing at which the exhaust valve 7 is opened at step S15 is not limited to the compression process time. A variety of timings at which fuel whose temperature is increased by the compression process can be introduced into the reforming catalyst 4 before this fuel is burnt can be set.

When the exhaust valve 7 is opened at step S15, since fuel is discharged from the cylinder 2 before being burnt, the output of the engine 1 is decreased. However, since this processing is performed at the low load operation time or the speed reduction time of the engine 1 (when step S11 is determined as YES), influence to the operation state of the engine 1 by the output decrease can be restrained. In the embodiment of FIG. 1, the reforming catalyst 4 is arranged only at the branched portions 3a of one cylinder (the cylinder of #4 in FIG. 1) among the four cylinders 2 of the engine 1. In this manner, by arranging the reforming catalyst 4 only on one cylinder among the four cylinders, even when the A/F ratio of gas discharged from this one cylinder at the rich spike time is rich (e.g., of the order of A/F=5), by allowing the A/F ratio of the exhaust discharged from other three cylinders to be lean (e.g., of the order of A/F=30), the A/F ratio of the exhaust flowing into the exhaust purifying catalyst 5 can be allowed to approach a theoretical A/F ratio. Thus, it is possible to increase the amount of oxygen flowing into the exhaust purifying catalyst 5 and to suppress the amount of HC discharged downstream of the exhaust purifying catalyst 5. Further, as described later, when the temperature of the exhaust purifying catalyst 5 is increased, by less amounts of fuel and reforming gas, the temperature of the exhaust purifying catalyst 5 can be increased quickly to a target temperature of the temperature increase time.

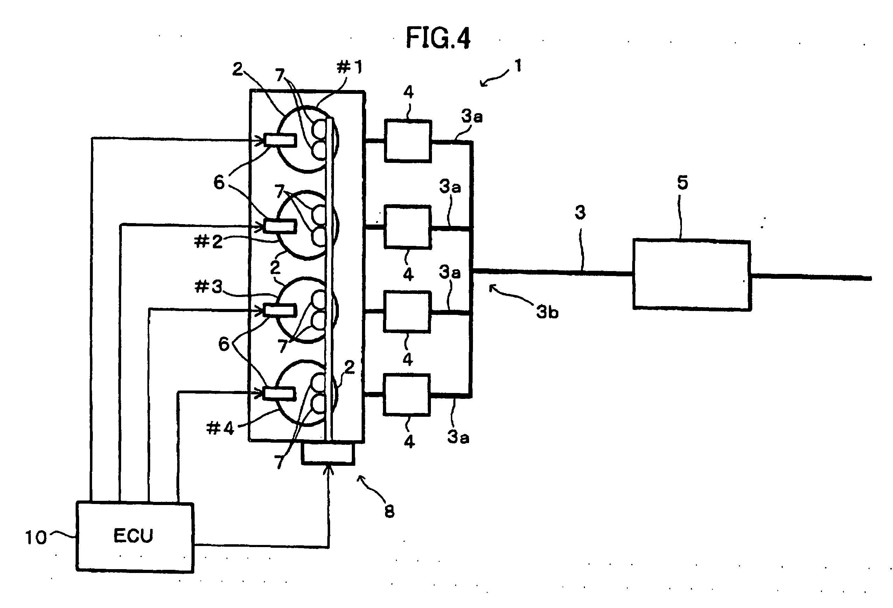

FIG. 4 is a modification example of the first embodiment. In the modification example of FIG. 4, an arrangement that the respective reforming catalysts 4 are arranged at the branched portions 3a of the respective cylinders 2 of the engine 1 is different from that of FIG. 1. In FIG. 4, parts in common with those of FIG. 1 are designated by like reference numerals. In this modification example, a valve gear 8 is provided such that the exhaust valves 7 of the respective cylinders 2 can be opened at the time of the compression process, that is, such that fuel whose temperature is increased by the compression process can be supplied to the reforming catalysts 4 arranged on the respective branched portions 3a before being burnt. In this modification example also, since fuel whose temperature is increased by the compression process can be introduced into the reforming catalysts 4 before being burnt, energy employed to increase the temperature of the reforming catalyst 4 can be reduced. In the modification example shown in FIG. 4, the ECU 10 may open the exhaust valves 7 at the time of the compression process at the rate of one time per three times or one time per four times of the compression process execution of the engine 1 at the time of the rich spike. The compression process of the engine 1 does not means the compression process of any one of cylinders but means the compression process which is sequentially repeatedly performed at the respective cylinders 2 of #1 to #4 at the time of the operation of the engine 1. In this manner, by opening the exhaust valve 7 at the time of the compression process time at the rate of one time per three times or one time per four times of the compression process execution of the engine 1, exhausts of a rich A/F ratio (e.g., of the order of A/F=5) at the time of the forced valve opening and exhaust of a lean A/F ratio (e.g., of the order of A/F=30) discharged from other cylinders 2 where the normal valve opening operation is performed are introduced into the exhaust purifying catalyst 5. Thus, the A/F ratio of the exhaust flowing into the exhaust purifying catalyst 5 can be allowed to approach the theoretical A/F ratio.

A fuel addition valve 17 as fuel addition means may be provided on the exhaust path 3 such that fuel of the engine 1 can be supplied to the exhaust purifying catalyst 5. In this case, at the time other than the low load operation time or the speed reduction time, fuel is supplied from this fuel addition valve 17 to execute the rich spike, and at the low load operation time or the speed reduction time, the rich spike is executed through the reforming gas obtained by reforming fuel. In this manner, since a reducing agent used for the rich spike is employed in accordance with the operation state of the engine 1, it is possible to execute the rich spike for the exhaust purifying catalyst 5 at an appropriate time and to maintain stably the exhaust purifying characteristics of the exhaust purifying catalyst 5 at a high level state.

### (Second Embodiment)

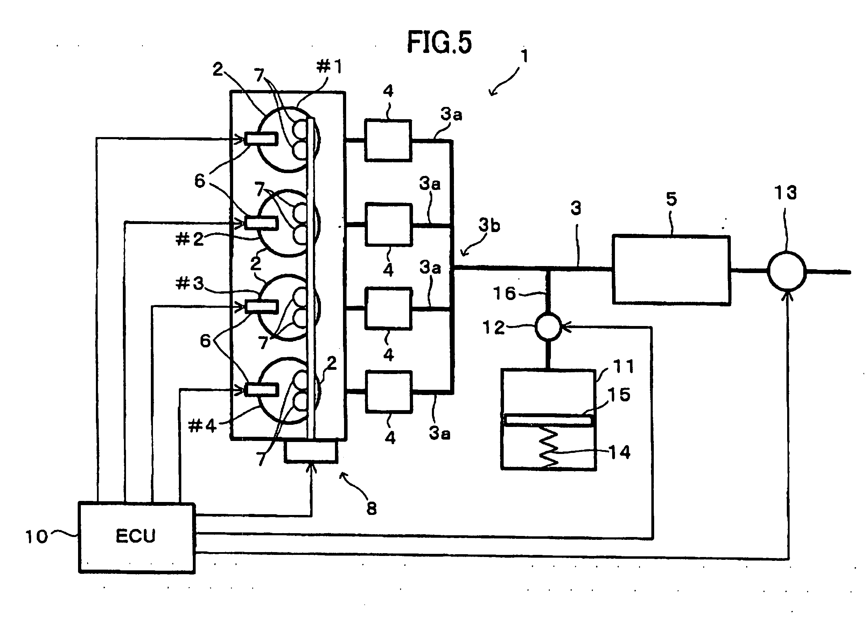

FIG. 5 shows a second embodiment of the present invention. Difference between this embodiment and the first embodiment is that a tank 11 as storing means for storing a reforming gas and an amount regulation valve 12 and an exhaust throttle valve 13 for controlling the flow of exhaust such that gas discharged from the cylinders 2 is introduced into the tank 11 are provided. In FIG. 5, parts in common with those of FIG. 1 are designated by like reference numerals.

As shown in FIG. 5, the tank 11 is connected with the exhaust path 3 downstream of the reforming catalyst 4 and upstream of the exhaust purifying catalyst 5 via a leading path 16 in order to store a reforming gas. The capacity of the tank 11 is set in accordance with the capacity of the exhaust purifying catalyst 5. The amount of a reforming gas supplied to the exhaust purifying catalyst 5 at the time of the rich spike is set based on the capacity of the exhaust purifying catalyst 5. Thus, the capacity of the tank 11 is set for example in such a way that an amount of reforming gas capable of being used for several rich spike times (e.g., of the order of four to six times) can be stored therein. The tank 11 is provided with a spring 14 and a piston 15 such that the reforming gas can be stored in the tank 11 in a high pressure state. A spring constant is set for the spring 14 such that the reforming gas can be discharged from the tank 11 to the exhaust path 3 at the operation time of the engine 1. The amount regulation valve 12 is arranged on the leading path 16, and the exhaust throttle valve 13 is arranged on the exhaust path 3 downstream of the exhaust purifying catalyst 5. As the tank 11, a container having a rigidity of the degree by which a certain shape and capacity can be maintained, such as a metal tank, a resin tank, or the like, may be provided. Further, for example, a sack-like container which can change the capacity by an actuator or the like may be provided. In the case of such a container, the actuator may be operated to control storing and discharging of the reforming gas.

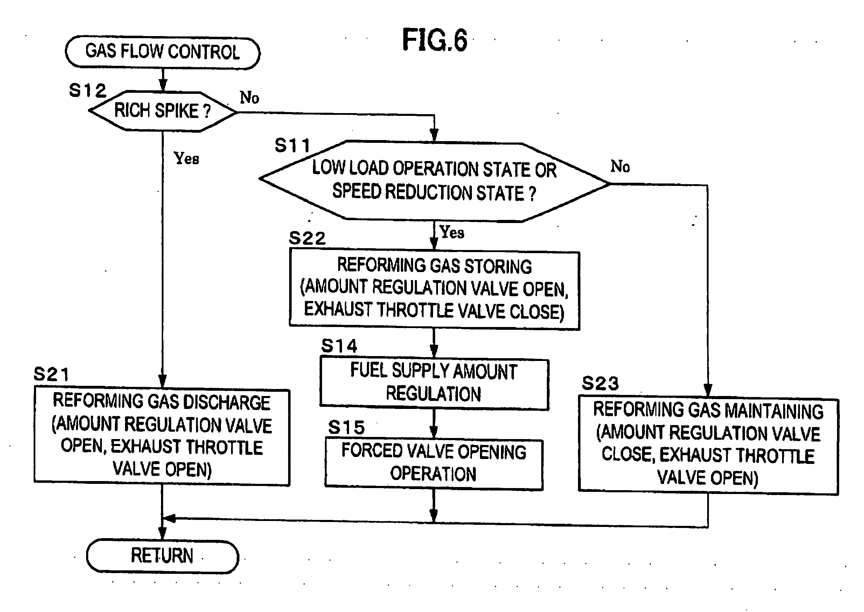

The ECU 10 executes the control routine shown in FIG. 6 to control the operation of the amount regulation valve 12 and exhaust throttle valve 13 to control the flow of gas. The control routine shown in FIG. 6 is executed repeatedly at a predetermines, cycle during the operation of the engine 1. In FIG. 6, the same processings as those of FIG. 3 are designated by the same reference characters, and explanation thereof will be omitted.

In the control routine shown in FIG. 6, the ECU 10 first determines whether it is time to execute the rich spike or not at step S12. If it determines that it is time to execute the rich spike, the process proceeds to step S21, and the ECU 10 opens the amount regulation valve 12 and exhaust throttle valve 13 to allow the reforming gas to be discharged from the tank 11 to the exhaust path 3. Thereafter, the control routine of this time is completed. The reforming gas discharged to the exhaust path 3 flows into the exhaust purifying catalyst 5, and by this reforming gas the rich spike is executed. As described later, since the reforming gas is stored in the tank 11 in a high pressure state, by opening the amount regulation valve 12, it is discharged to the exhaust path 3. By allowing the operation of the amount regulation valve 12 to be controlled in such a way, the amount regulation valve 12 functions as supply means of the present invention.

Meanwhile, if it is determined that it is not time to execute the rich spike, the process proceeds to step S11, and the ECU 10 determines whether the engine 1 is in the low load operation state or the speed reduction state. If it is determined that the engine 1 is in the low load operation state or the speed reduction state, the process proceeds to step S22, and the ECU 10 opens the amount regulation valve 12 and closes the exhaust throttle valve 13. That is, gas flow is changed such that gas discharged from the cylinders 2 is introduced into the tank 11. In the next step S14, the ECU 10 regulates the amount of fuel supplied to the cylinders 2 such that the A/F ratio of the cylinders 2 at which the exhaust valve 7 is forcibly opened is regulated to be a predetermined A/F ratio at which the reforming catalyst 4 exhibits fuel reforming characteristics. In the following step S15, the ECU 10 controls the operation of the valve gear 8 such that the exhaust valve 7 performs the forced valve opening operation in which the exhaust valve 7 is opened at a predetermined timing of the compression process time. Thereafter, the control routine of this time is completed. In this manner, by allowing the amount regulation valve 12 to be in the valve opening state and by allowing the exhaust throttle valve 13 to be in the valve closing state, and in this state, by reforming fuel, reforming gas can be stored in the tank 11. As shown in FIG. 5, in the tank 11, the spring 14 and the piston 15 are provided. At the time of storing of the reforming gas, the spring 14 is compressed by the reforming gas introduced into the tank 11. Thus, the reforming gas is stored in the tank 11 in a high pressure state. By allowing the operations of the amount regulation valve 12 and the exhaust throttle valve 13 to be controlled in such a way, the amount regulation valve 12 and the exhaust throttle valve 13 function as leading means of the present invention.

If it is determined that the engine 1 is not in the low load operation state or the speed reduction state, the process proceeds to step S23, and the ECU 10 closes the amount regulation valve 12 and opens the exhaust throttle valve 13. Thereafter, the control routine of this time is completed. In this manner, by allowing the amount regulation valve 12 to be in the valve closing state and by allowing the exhaust throttle valve 13 to be in the valve opening state, the reforming gas can be maintained in the tank 11.

With this embodiment, since the reforming gas can be stored in the tank 11, the rich spike can be executed for the exhaust purifying catalyst 5 during an appropriate time. Thus, the exhaust purifying characteristics of the exhaust purifying catalyst 5 can be maintained stably at a high level state. When there is no obstacle in the operation state of the engine 1, fuel can be reformed, and the reforming gas can be stored in the tank 11.

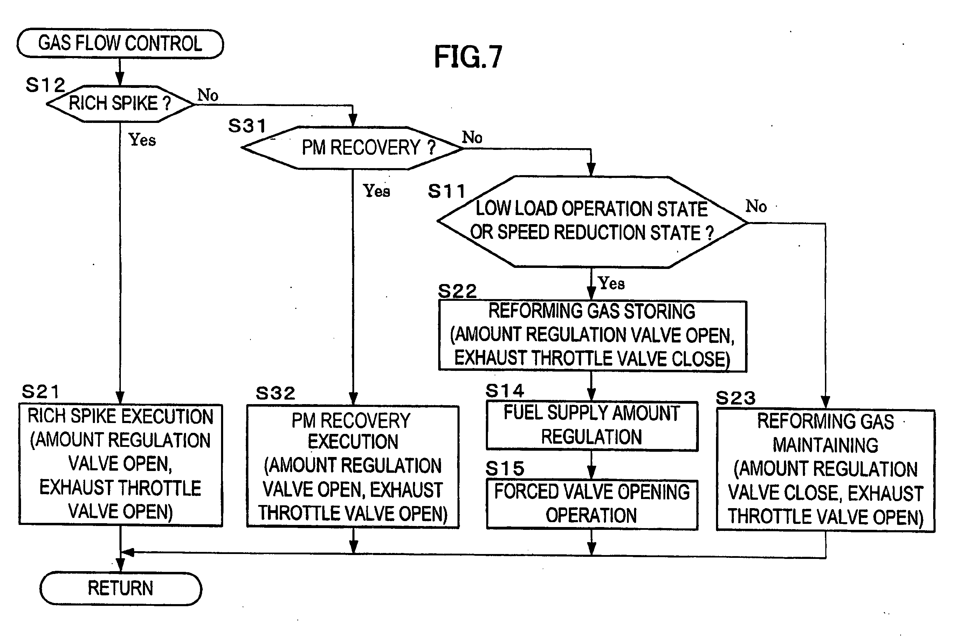

FIG. 7 shows a modification example of a control routine of FIG. 6. The exhaust purifying catalyst 5 recovers its function not only by the above-mentioned NOₓ deoxidization but also by an operation (PM recovery) in which the temperature of the exhaust purifying catalyst 5 is increased to a temperature range (e.g., 650° degree. C. or greater) in which a particle material (PM) accumulated on the exhaust purifying catalyst 5 is oxidized and removed. Since the reactability of the reforming gas is high, by supplying the reforming gas to the exhaust purifying catalyst 5 at the time of the PM recovery, the reform gas can increase its temperature from a portion near a front end surface of the exhaust purifying catalyst 5 (an upstream portion of the exhaust purifying catalyst 5). Thus, the reforming gas is supplied to the exhaust purifying catalyst 5 even at the PM recovery time to restrain a temperature distribution of the exhaust purifying catalyst 5 at the temperature increasing time. The control routine of FIG. 7 is executed repeatedly at a predetermined cycle during the operation of the engine 1. In FIG. 7, the same processings as those of FIG. 6 are designated by the same reference characters, and explanation thereof will be omitted.

In the control routine of FIG. 7, the ECU 10 first determines whether it is time to execute the rich spike at step S12. If it is determined that it is time to execute the rich spike, the process proceeds to step S21, and thereafter processing similar to that of the control routine of FIG. 6 is executed. Meanwhile, if it is determined that it is not time to execute the rich spike, the process proceeds to step S31, and the ECU 10 determines whether it is time to execute the PM recovery. For example, the amount of PM accumulated on the exhaust purifying catalyst 5 can be estimated from the total amount of fuel that the injectors 6 have supplied to the cylinders 2. The PM recovery is executed for example when this PM accumulation amount reaches a predetermined amount. As the predetermined amount, for example an upper limit value of the PM accumulation amount at which the exhaust purifying catalyst 5 can exhibit the exhaust purifying characteristics appropriately is set. If it is determined that it is time to execute the PM recovery, the process proceeds to step S32, and the ECU 10 opens the amount regulation valve 12 and the exhaust throttle valve 13. By opening the amount regulation valve 12, the reforming gas stored in the tank 11 is discharged to the exhaust path 3 to flow into the exhaust purifying catalyst 5, and the PM recovery is executed. Thereafter, the control routine of this time is completed. Meanwhile, if it is determined that it is not time to execute the PM recovery, the process proceeds to step S11, and thereafter processings similar to those of the control routine of FIG. 6 are executed.

In this manner, by supplying the reforming gas having a high reactability at the PM recovery time, a temperature distribution of the exhaust purifying catalyst 5 in the PM recovery can be restrained.

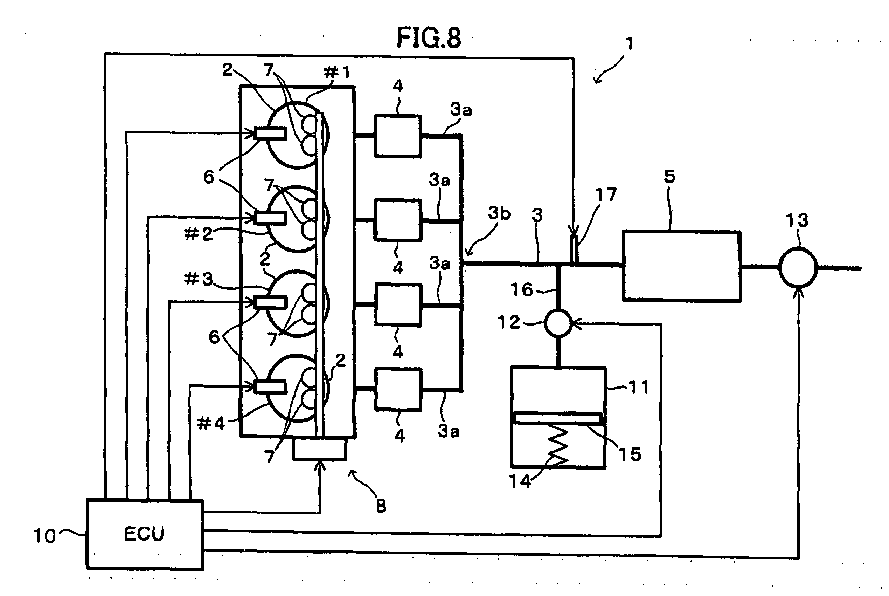

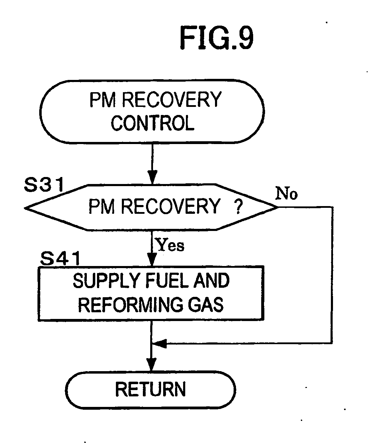

FIG. 8 shows a first modification example of the second embodiment. In the modification example of FIG. 8, a fuel addition valve 17 as fuel addition means is provided on the exhaust path 3 such that fuel is supplied to the exhaust purifying catalyst 5, and the reforming gas and fuel are supplied to the exhaust purifying catalyst 5 to execute the PM recovery. FIG. 9 shows a PM recovery control routine that the ECU 10 executes in order to control the operations of the fuel addition valve 17 and the amount regulation valve 12 at the time of the PM recovery to supply fuel and reforming gas. This control routine is executed repeatedly at a predetermined cycle during the operation of the engine 1. In FIG. 9, the same processings as those of FIG. 7 are designated by the same reference characters, and explanation thereof will be omitted.

In the control routine of FIG. 9, the ECU 10 first determines whether it is time to execute the PM recovery at step S31. If it is determined that it is not time to execute the PM recovery, the control routine of this time is completed. Meanwhile, if it is determined that it is time to execute the PM revovery, the process proceeds to step S41, and the ECU 10 controls the operations of the fuel addition valve 17 and the amount regulation valve 12 to supply fuel and reforming gas. Thereafter, the control routine of this time is completed.

As a control method for the operations of the fuel addition valve 17 and the amount regulation valve 12 in step S41, these valves 12, 17 may be controlled such that the reforming gas and fuel are supplied at a predetermined ratio, or they may be controlled such that the reforming gas and fuel are supplied in turn in a provided priority order. The operation of the fuel addition valve 17 or the amount regulation valve 12 may be controlled such that one of fuel or reforming gas is supplied at a predetermined amount and that by the other one of fuel or reforming gas a temperature distribution of the exhaust purifying catalyst 5 is restrained. One example of such a control method will be shown below.

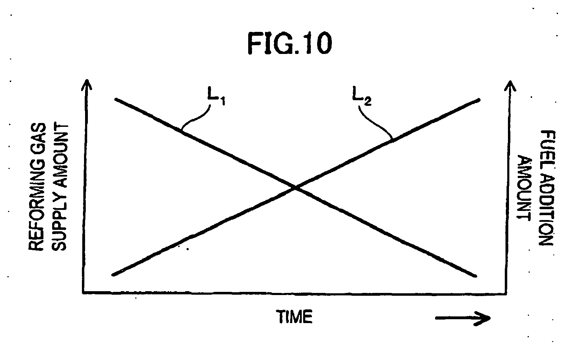

When a priority order is provided to supply the reforming gas and fuel, for example just after the PM recovery is executed, first the reforming gas maybe supplied to increase the temperature of the exhaust purifying catalyst 5, and thereafter fuel may be supplied. By first allowing the reforming gas having a high reactability to be supplied to increase the temperature of the exhaust purifying catalyst 5 and then by supplying fuel to the exhaust purifying catalyst 5 whose temperature has been increased, fuel which has a low reactability compared to the reforming gas can be allowed to react appropriately in the exhaust purifying catalyst 5. Thus, a temperature distribution of the exhaust purifying catalyst 5 can be restrained. When an additive agent to the exhaust purifying catalyst 5 is switched from the reforming gas to fuel, as one example is shown in FIG. 10, the supply amounts of the reforming gas and fuel may be changed. In FIG. 10, a line L₁ and a line L₂ represent the supply amount of the reforming gas and the addition amount of fuel, respectively. In FIG. 10, the supply amount of the reforming gas is gradually decreased as the PM recovery time elapses, and the addition amount of fuel is increased in response to this decrease of the supply amount of the reforming gas. In this way, by switching additive agents gradually, it is possible to shift a temperature increase due to the reforming gas to a temperature increase due to the fuel gradually. Thus, a rapid temperature change of the exhaust purifying catalyst 5 can be restrained.

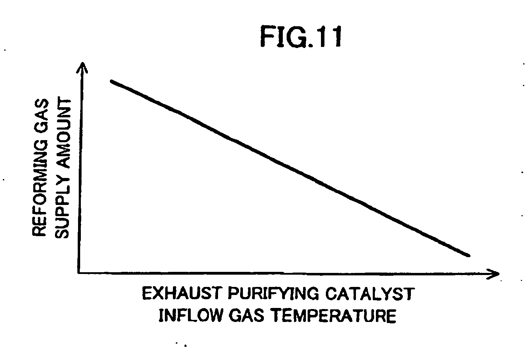

When the reforming gas and fuel are supplied at a predetermined ratio at the time of the PM recovery*,* for example this ratio may be changed in response to the temperature of gas (exhaust) flowing into the exhaust purifying catalyst 5. For example, the ratio is changed such that the lower the temperature of gas flowing into the exhaust purifying catalyst 5, the more the supply amount of the reforming gas is increased. Such processing is executed in step S41, and the operations of the amount regulation valve 12 and the fuel addition valve 17 are controlled, so that the ECU 10 functions as fuel supply ratio regulation means of the present invention. FIG. 11 shows one example of a relationship between a gas temperature which flows into the exhaust purifying catalyst 5 and the reforming gas supply amount. When the amount of gas flowing into the exhaust purifying catalyst 5 is less, since the front end surface of the exhaust purifying catalyst 5 is cooled down, there is a risk that the temperature of an upstream side portion adjacent to the front end surface of the exhaust purifying catalyst 5 is lowered. Thus, the supply amount of the reforming gas having a high reactability is allowed to increase the temperature of this upstream side portion, whereby a temperature distribution of the exhaust purifying catalyst 5 is restrained.

This ratio may be changed such that the higher the SV in the exhaust purifying catalyst 5, the more the supply amount of the reforming gas is increased. Since the higher the SV, that is, the greater the exhaust flow amount which passes the exhaust purifying catalyst 5, the more a reaction rate in the exhaust purifying catalyst 5 is decreased, a temperature distribution is easy to occur in the exhaust purifying catalyst 5. Thus, by allowing the supply amount of the reforming gas having a high reactability to increase as the SV is greater, a decrease in the reaction rate is compensated, and a temperature distribution of the exhaust purifying catalyst 5 is restrained.

The operation of the amount regulation valve 12 may be controlled such that a fixed amount of reforming gas is supplied to the exhaust purifying catalyst 5, and fuel may be supplied such that a temperature distribution of the exhaust purifying catalyst 5 is restrained, whereby temperature regulation of the exhaust purifying catalyst 5 may be executed. The constituent of the reforming gas changes by the temperature of the reforming catalyst 4 at the time of fuel reforming, by an activation state, and by a deterioration rate of the reforming catalyst 4. Thus, a fixed amount of reforming gas whose constituent is unstable but which has a high reactability is supplied to the exhaust purifying catalyst 5 to increase the temperature of the upstream side portion of the exhaust purifying catalyst 5, and a temperature distribution generated by this temperature increase is regulated by fuel whose characteristics are stable. In this case, since temperature regulation of the exhaust purifying catalyst 5 is executed by fuel whose characteristics are stable, the amount of fuel which should be supplied to the exhaust purifying catalyst 5 at the time of temperature regulation is easy to be estimated. Thus, temperature regulation of the exhaust purifying catalyst 5 can be executed appropriately.

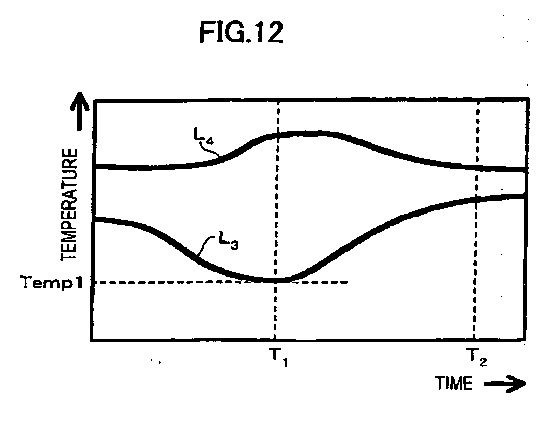

A predetermined amount of fuel maybe supplied to the exhaust purifying catalyst 5 at the time of the PM recovery to increase the temperature of the exhaust purifying catalyst 5, and the reforming gas may be supplied such that a temperature distribution of the exhaust purifying catalyst 5 is restrained at the time of a temperature increase due to this fuel. When the temperature of gas which flows into the exhaust purifying catalyst 5 at the time of a temperature increase of the exhaust purifying catalyst 5 by fuel is low, there is a risk that the temperature of an upstream side portion adjacent to the front end surface of the exhaust purifying catalyst 5 is lowered. Thus, the reforming gas is supplied in order to restrain the occurrence of a temperature distribution due to this temperature decrease. FIG. 12 shows one example of temperature changes of the upstream side portion and a downstream side portion of the exhaust purifying catalyst 5 at the time of the PM recovery. In FIG. 12, a line L₃ and a line L₄ represent the temperature changes of the upstream side portion of the exhaust purifying catalyst 5 and the downstream side portion of the exhaust purifying catalyst 5, respectively. In FIG. 12, the operation of the amount regulation valve 12 is controlled such that the reforming gas is supplied when the temperature of the exhaust purifying catalyst 5 reaches a lower limit (Temp1 of FIG. 12) of the temperature range in which PM adhering to the exhaust purifying catalyst 5 can be oxidized and removed. Thus, as shown in FIG. 12, when the temperature of the upstream side portion of the exhaust purifying catalyst 5 reaches the lower limit Temp1 at a time T₁, the reforming gas is supplied to the exhaust purifying catalyst 5. Thereafter, supply of the reforming gas is stopped at the time (a time T₂ of FIG. 12) when the temperature of the upstream side portion of the exhaust purifying catalyst 5 increases and the temperature distribution of the exhaust purifying catalyst 5 converges into an acceptable region. Thus, by allowing the reforming gas to be supplied, the temperature distribution of the exhaust purifying catalyst 5 can be restrained.

As described above, by allowing the fuel and reforming gas to be supplied in such a way, the temperature distribution of the exhaust purifying catalyst 5 at the time of the PM recovery can be restrained. The method in which fuel is supplied to the exhaust purifying catalyst 5 is not limited to the fuel addition valve 17. Fuel may be supplied by jetting fuel from the injector 6 at the end of an expansion process of the engine 1, that is, by a so-called post injection. In this case, the injector 6 functions as fuel addition means.

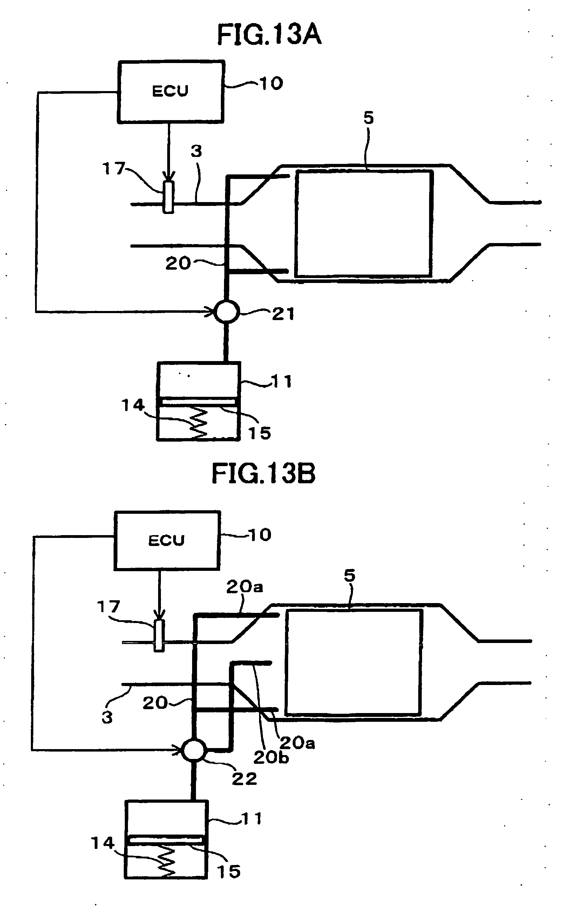

When a temperature distribution of the exhaust purifying catalyst 5 at the time of the PM recovery is restrained by the reforming gas, for example, as shown in FIG. 13A, a supply path 20 may be provided separately from the leading path 16 such that the reforming gas is supplied toward a place where the temperature of the exhaust purifying catalyst 5 is easy to be decreased. In FIGS. 13A and 13B, the leading path 16 is omitted and is not shown. When the amount of heat radiation of the exhaust purifying catalyst 5 is large, the temperature of an outer peripheral portion of the exhaust purifying catalyst 5 is readily decreased. Thus, by providing the supply path 20 such that the reforming gas is supplied toward this outer peripheral portion, a temperature distribution of the exhaust purifying catalyst 5 can be restrained further appropriately. The operation of a supply amount regulation valve 21 provided on the supply path 20 is controlled by the ECU 10 so that the supply amount of the reforming gas supplied through the supply path 20 is regulated. As shown in FIG. 13B, a supply path 20 which has first supply nozzles 20a capable of supplying the reforming gas toward the outer peripheral portion of the exhaust purifying catalyst 5 and a second supply nozzle 20b capable of supplying the reforming gas toward a central portion of the exhaust purifying catalyst 5 may be provided. In this case, a supply destination switching valve 22 capable of switching the supply destinations of the reforming gas between the first supply nozzle 20a and the second supply nozzle 20b may be provided on the supply path 20 to change the supply destination of the reforming gas in accordance with a place of the exhaust purifying catalyst 5 whose temperature is low. In this way, by appropriately changing the supply destination of the reforming gas, a temperature distribution of the exhaust purifying catalyst 5 can be restrained further appropriately.

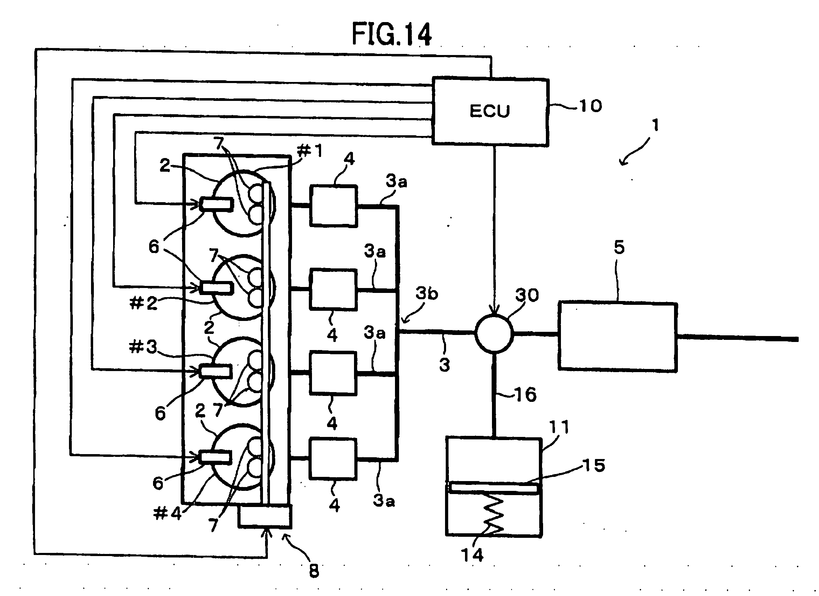

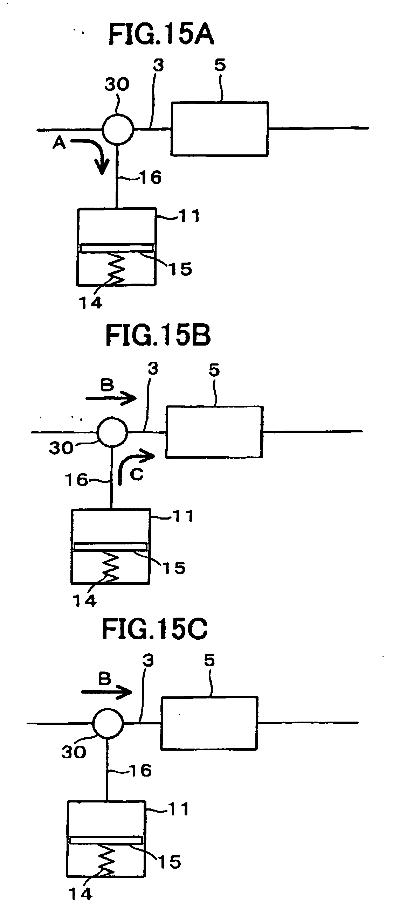

FIG. 14 shows a second modification example of the present embodiment. In FIG. 14, a three-way valve 30 is provided on the exhaust path 3, and the operation of this three-way valve 30 is controlled to execute guiding of the reforming gas to the tank 11 and discharging of the reforming gas from the tank 11. In FIG. 14, parts in common with those of FIG. 5 are designated by like reference numerals. The three-way valve 30 can be switched among a storing position at which gas flow from the engine 1 to the exhaust purifying catalyst 5 is prevented and at which gas flow from the engine 1 to the tank 11 is permitted, a discharging position at which gas flow from the engine 1 to the exhaust purifying catalyst 5 is permitted and at which gas flow from the tank 11 to the exhaust purifying catalyst 5 is permitted, and a holding position at which gas flow from the engine 1 to the exhaust purifying catalyst 5 is permitted and at which gas flow from the tank 11 to the exhaust purifying catalyst 5 is prevented. The operation of the three-way valve 30 is controlled by the ECU 10 for example based on an output signal of a pressure sensor 31 provided on the tank 11. The condition to switch the three-way valve 30 to the respective position is similar to that through which the operations of the amount regulation valve 12 and the exhaust throttle valve 13 are controlled in the control routine of FIG. 6. In the aspect of FIG. 14, gas flows of the cases where the three-way valve 30 is switched to the respective positions are shown in FIGS. 15A to 15C. FIG. 15A shows gas flow of the case where the three-way valve 30 is switched to the storing position, FIG. 15B shows gas flow of the case where the three-way valve 30 is switched to the discharging position, and FIG. 15C shows gas flow of the case where the three-way valve 30 is switched to the holding position, respectively. When the three-way valve 30 is switched, to the storing position, only gas flow from the engine 1 to the tank 11, shown by an arrow A in FIG. 15A, is permitted. Thus, the reforming gas reformed in the reforming catalyst 4 can be introduced into the tank 11 to be stored. The three-way valve 30 is switched to the holding position when it is determined that the reforming gas is stored in the tank 11 at a predetermined-pressure. By switching the three-way valve 30 in such a wary, influence to the operation condition of the engine 1 is restrained. When the three-way valve 30 is switched to the discharging position, exhaust flow from the engine 1 to the exhaust purifying catalyst 5, shown by an arrow B in FIG. 15B, is permitted, and reforming gas flow from the tank 11 to the exhaust purifying catalyst 5, shown by an arrow C is permitted. Thus, the reforming gas which has been stored in the tank 11 can be supplied to the exhaust purifying catalyst 5. When the three-way valve 30 is switched to the holding position, as shown in FIG. 15C, only exhaust flow (gas flow of the arrow B) from the engine 1 to the exhaust purifying catalyst 5 is permitted. Thus, the reforming gas which has been stored in the tank 11 can be maintained. By controlling the operation of the three-way valve 30 in such a way, storing, discharging, holding of the reforming gas can be executed by one valve. In this case, the three-way valve 30 functions as leading means and supply means of the present invention.

In FIGS. 5 and 8, the arrangement position of the exhaust throttle valve 13 is not limited to a place downstream of the exhaust purifying catalyst 5. The exhaust throttle valve 13 may be disposed at a place upstream of the exhaust purifying catalyst 5 as long as gas flow can be changed such that the reforming gas is introduced into the tank 11. When a turbocharger having a variable nozzle is provided and where the leading path 16 is coupled with the exhaust path 3 upstream of the variable nozzle, the variable nozzle may be brought to a completely closed state so that the reforming gas is introduced into the tank 11. When the valve lift of the variable nozzle has a limit at the time of total closing and where the nozzle is a little bit opened even in the total closing state, the exhaust throttle valve 13. may be provided on the exhaust path 3, and both the variable, nozzle and the exhaust throttle valve 13 may be closed at the time of fuel reforming to introduce the reforming gas to the tank 11. When the exhaust path 3 is coupled with an intake path of the engine 1 through an EGR path in order to recirculate exhaust and where an EGR valve is disposed on this EGR path, the EGR valve is brought to a completely closed state such that the reforming gas does not flow into the intake path at the time of fuel reforming. A suction pump may be provided so as to introduce the reforming gas into the tank 11. In this case, by the suction pump the reforming gas can be stored in the tank 11 at a pressure higher than that at which it is introduced by an exhaust pressure. In this case, the suction pump functions as leading means of the present invention.

### (Third Embodiment)

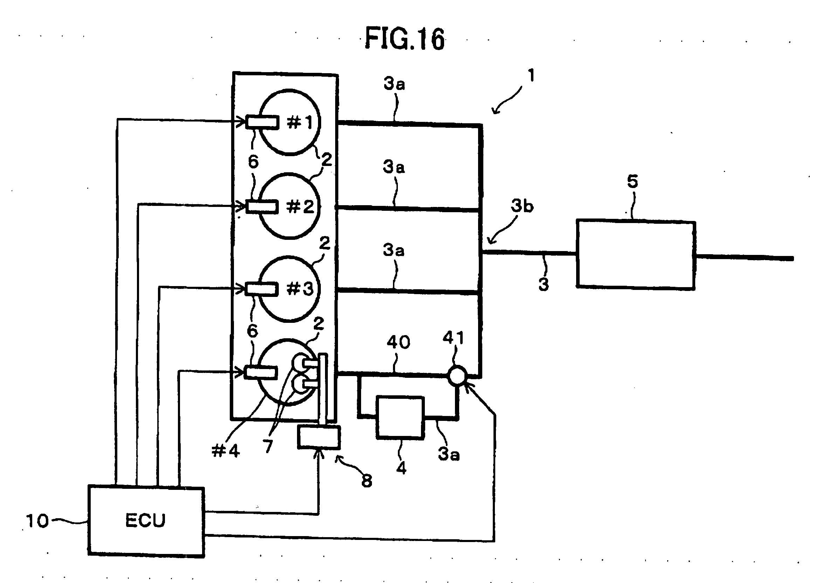

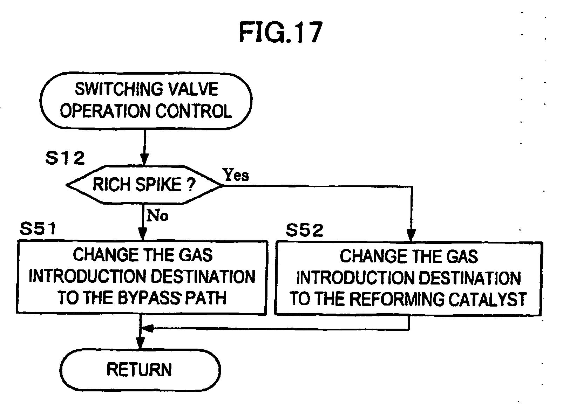

FIG. 16 shows a third embodiment of the present invention. Difference between this embodiment and the other embodiments is that a bypass path 40 bypassing the reforming catalyst 4 provided on the branched portions 3a and a switching valve 41 as valve means capable of switching between a position where gas discharged from the cylinders 2 is introduced into the reforming catalyst 4 and a position where it is introduced into the bypass path 40 are provided. The ECU 10 executes the control routine of FIG. 17 to control the operation of the switching valve 41 so as to change a flow path of the gas discharged from the cylinders 2. The control routine of FIG. 17 is executed repeatedly at a predetermined cycle during the operation of the engine 1. The ECU 10 also executes the control routine of FIG. 3, parallel to the control routine of FIG, 16. In FIG. 17, the same processings as those of FIG. 3 are designated by the same reference characters and explanation thereof will be omitted.

In the control routine of FIG. 17, the ECU 10 first determines whether it is time to execute the rich spike at step S12. If it is determined that it is not time to execute the rich spike, the process proceeds to step S51, and the ECU 10 switches the switching valve 41 such that gas discharged from the cylinders 2 is introduced into the bypass path 40. Thereafter, the control routine of this time is completed. Meanwhile, if it is determined that it is time to execute the rich spike, the process proceeds to step S52, and the ECU 10 switches the switching valve 41 such that gas discharged from the cylinders 2 is introduced into the reforming catalyst 4. Thereafter, the control routine of this time is completed.

Deterioration of the reforming catalyst 4 is accelerated in a case where the A/F ratio is lean and at a high temperature. In this embodiment, since exhaust of a lean A/F ratio discharged from the cylinders 2 at the time of normal operation of the engine 1 is restrained from flowing into the reforming catalyst 4, deterioration of the reforming catalyst 4 can be suppressed. In the normal operation, by allowing exhaust to be discharged via the bypass path 40, a back pressure decrease of #4 cylinder can be restrained. Thus, the output of the engine 1 can be improved. Fluctuation of the outputs among the cylinders 2 can be restrained. Meanwhile, at the time of the rich spike, since the operation of the switching valve 41 is controlled such that gas discharged from the cylinders 2 is introduced into the reforming catalyst 4, the exhaust valve 7 is forcibly opened through the control routine of FIG. 3 so that fuel is reformed to reforming gas. By arranging the switching valve 41 at a place downstream of the reforming catalyst 4, a heat load with respect to the switching valve 41 can be more restrained than when it is arranged at a place upstream of the reforming catalyst 4. The switching valve 41 may also be disposed at a place upstream of the reforming catalyst 4.

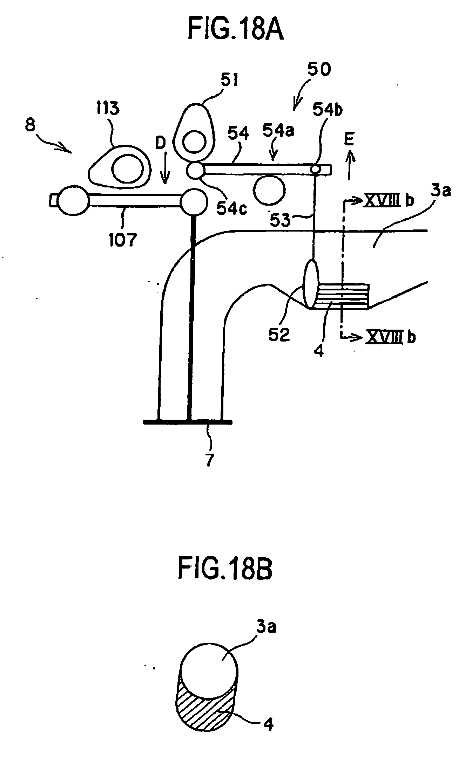

FIGS. 18A and 18B show one example of a valve opening device 50 which introduces gas discharged from the cylinders 2 into the reforming catalyst 4 only when the exhaust valve 7 is forcibly opened. FIG. 18A shows a schematic view of the valve opening device 50, and FIG. 18B a cross-sectional view, taken along line XVIIIb- XVIIIb of FIG. 18A, respectively. In FIGS. 18A and 18B, parts in common with those of FIGS. 2A and 2B are designated by like reference numerals.

The valve opening-device 50 is provided with a cam 51 driven by an illustrated motor and an arm 54 connected with a valve body 52 provided on the branched portion 3a via a rod 53. The arm 54 is rotatably provided about a fulcrum 54a. As shown in FIG. 18A, the rod 53 is connected with one end 54b of the arm 54. Thus, when other end 54c of the arm 54 is pressed down is an arrow D direction by the cam 51, the one end 54b moves in an arrow E direction. Thus, the valve body 52 moves upwardly in FIGS. 18A and 18B.

Next, one example of the operation of the valve opening device 50 will be described.

The open/close operation of the exhaust valve 7 in the exhaust process is performed by the normal use locker arm 107 which is driven by the normal use cam 113. When the exhaust valve 7 is opened at the compression process time in order to generate reforming gas, the cam 51 is driven by a motor to press down the other end 54c. This movement of the other end 54c opens the exhaust valve 7 via the normal use locker arm 107 and moves the valve body 52 upwardly. As shown in FIGS. 18A and 18B, since the reforming catalyst 4 is arranged on a lower portion of the branched portion 3a, by the movement of the valve body 52 upwardly, fuel discharged from the cylinders 2 can be introduced into the reforming catalyst 4. By such an operation, the valve opening device 50 functions as valve opening means of the present invention.

Since the valve opening device 50 operates in such a way, gas discharged from the cylinders 2 can be introduced into the reforming catalyst 4 only when the exhaust valve 7 is forcibly opened. An actuator may be provided as a mechanism driving the arm 54 in the arrow D direction. The cam 51 may be driven by transmission of the rotation of a crank shaft of the engine 1.

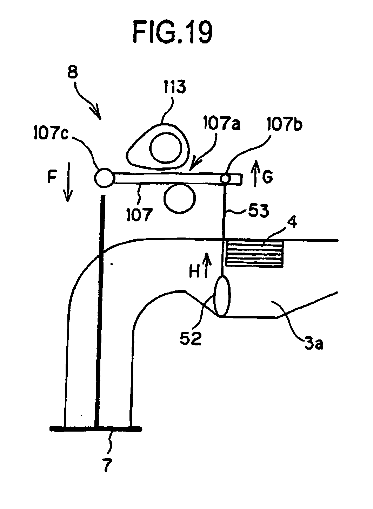

FIG. 19 shows an example in which a mechanism by which gas discharged from the cylinders 2 is introduced into the reforming catalyst 4 only when the exhaust valve 7 is forcibly opened is incorporated in the valve gear 8. In FIG. 19, parts in common with those of FIGS. 18A and 18B are designated by like reference numerals. In FIG. 19, the normal use cam 113 is driven by an unillustrated motor. A normal use locker arm 107 is disposed so as to be rotatable about a fulcrum 107a. The valve body 52 is connected with one end 107b of the normal use locker arm 107 via the rod 53. Thus, when other end 107c of the normal use locker arm 107 is pressed down in an arrow F direction by the normal use cam 113, the one end 107b moves in an arrow G direction, and the valve body 52 moves in an arrow H direction. As shown in FIG. 19, in this aspect, the reforming catalyst 4 is disposed on an upper portion of the branched portion 3a. The valve body 52 is provided so as to move up to a ceiling portion of the branched portion 3a when the exhaust valve 7 is opened up to a maximum lift amount which is set for the exhaust valve 7 by the normal use locker arm 107 (full lift).

Next, one example of the operation of the valve gear 8 of FIG. 19 will be described. At the time of exhaust process, the normal use cam 113 rotates so that the other end 107c of the normal use locker arm 107 is pressed down in the arrow F direction, and the exhaust valve 7 is opened. In this case, since the full lift of the exhaust valve 7 is executed, the reforming catalyst 4 is hidden by the valve body 52. Meanwhile, when the exhaust valve 7 is opened at the time of the compression process in order to generate the reforming gas, the operation of the normal use cam 113 is controlled to open the exhaust valve 7 (small lift) to the extent that fuel whose temperature is increased in the compression process is discharged from the cylinders 2. This is because the full lift of the exhaust valve 7 cannot be executed since a piston in the cylinder 2 is at a position close to a top dead center. When the small lift of the exhaust valve 7 is executed in such a way, since the valve body 52 does not move up to the ceiling portion of the branched portion 3a, the reforming catalyst 4 is not hidden by the valve body 52. Thus, gas discharged from the cylinders 2 is introduced into the reforming catalyst 4.

As described above, in the valve gear 8 of FIG. 19, since the full lift of the exhaust valve 7 is executed at the time of the exhaust process, inflow of exhaust to the reforming catalyst 4 can be restrained. Thus, gas can be introduced into the reforming catalyst 4 only when the small lift of the exhaust valve 7 is executed at the time of fuel reforming.

The present invention is not limited to the above-described embodiments and may be executed in various aspects. For example, the present invention is not limited to a diesel engine and may be applied to a so-called direct injection type engine in which gasoline is directly injected into the cylinders. It may also be applied to a so-called port injection type engine in which an injector is provided on a suction port corresponding to each cylinder. An exhaust purifying catalyst is not limited to the above-described one in which the above-mentioned filter base material for capturing particulates is allowed to carry an occlusion deoxidization type NOₓ catalyst. As an exhaust purifying catalyst, an occlusion deoxidization type NOₓ catalyst may be provided, or a catalyst in which a filter base material for capturing particulates is allowed to carry an oxidization catalyst maybe provided. In the present invention, the occlusion deoxidization type NOₓ catalyst may be one in which NOₓ can be maintained by catalyst, and whether NOₓ is maintained in a form of absorption or adsorption is not limited to the word, occlusion.

The reforming gas may be supplied to an intake system of an engine. Since the reforming gas has a high reactability, ignitability can be improved. Thus, by supplying it to the intake system at the time of engine start up, startability of the engine can be improved.

In the case of an engine having six cylinders, the reforming catalysts maybe disposed on branched portions of any two cylinders among these six cylinders. By arranging the reforming catalysts on the branched portions of two cylinders among six cylinders, even when the A/F ratio of gas discharged from the two cylinders of which the reforming catalysts are arranged on the branched portions is rich, by allowing the A/F ratio of gas discharged from other four cylinders to be lean, the A/F ratio of gas flowing into the exhaust purification catalysts can be allowed to approach a theoretical A/F ratio. In this manner, by disposing the reforming catalysts on the branched portions of cylinders which corresponds to approximately one fourth of all cylinders of the engine 1 (e.g., in the case of an engine with eight cylinders, any two cylinders among the eight cylinders), the A/F ratio of gas flowing into the exhaust purifying catalysts can be allowed to approach a theoretical A/F ratio.

In a function recovery process of the exhaust purifying catalyst, other than the above-described NOₓ deoxidization and PM recovery, there is an S recovery in which the A/F ratio of exhaust is allowed to be rich and in which the temperature of the exhaust purifying catalyst is increased to a temperature range in which sulfur (S) is discharged from the exhaust purifying catalyst so that S poisoning of the exhaust purifying catalyst is recovered. In such an S recovery time or the rich spike time (NOₓ deoxidization time) , an A/F ratio (baseA/F) of cylinders at which the reforming catalysts are not arranged, set by the ECU, may be changed to a richer side. By changing the base A/F of the cylinders at which the reforming catalysts are not disposed to a rich side, the A/F ratio of exhaust introduced into the exhaust purifying catalyst can be allowed to be richer while the A/F ratio of the cylinders at which the reforming catalysts are disposed is maintained at an A/F ratio which is preferable for reforming of fuel. Thus, an NOₓ deoxidization efficiency or an S recovery efficiency can be improved. In order to change the base A/F to a rich side, for example, exhaust (EGR gas) which is recirculated (EGR) from an exhaust path to an intake path is increased. At the time of the PM recovery, the base A/F of a cylinder at which the reforming catalyst is not disposed may be changed to a lean side. In this manner, by changing the base A/F of a cylinder at which the reforming catalyst is not disposed to a leaner side, since the oxygen amount in exhaust can be increased, a temperature increasing characteristic can be further improved. In order to change the base A/F to a lean side, for example, the amount of EGR gas provided to a cylinder at which the reforming catalyst is not disposed is decreased.

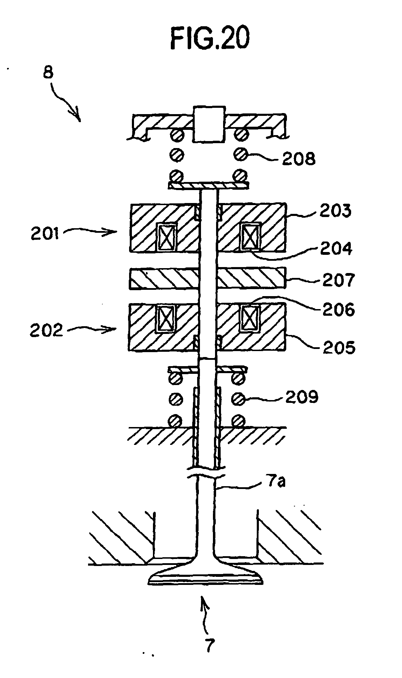

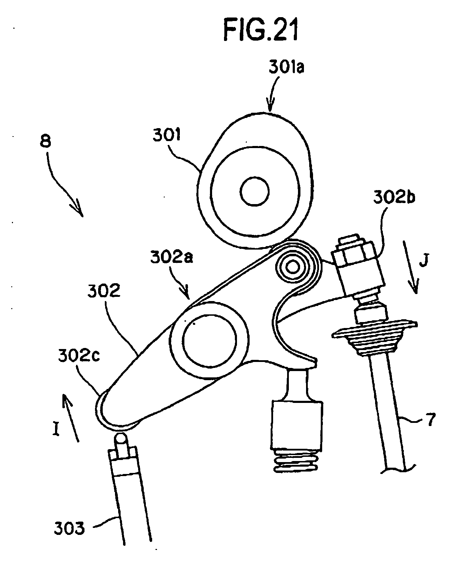

The valve gear 8 employed in the present invention is not limited to the above-described one. For example, valve gears 8 shown in FIGS. 20 and 21 may be employed. In the valve gear 8 of FIG. 20, an exhaust valve 7 is driven to be opened/closed by an electromagnet (close drive electromagnet) 201 for driving it in a valve closing direction and an electromagnet (open drive electromagnet) 202 for driving it in a valve opening direction. The close drive electromagnet 201 has an upper core 203 and an upper coil 204, and when current is supplied to the upper coil 204, a magnetic force occurs. The open drive electromagnet 202 has a lower core 205 and a lower coil 206, and when current is supplied to the lower coil 206, a magnetic force occurs. Supply of current to the upper coil 204 and lower coil 206 is controlled by an unillustrated ECU 10. An armature 207 is provided on a valve shaft 7a of the exhaust valve 7, and by sucking this armature 207 by the magnetic force of the close drive electromagnet 201 and the magnetic force of the open drive electromagnet 202, the exhaust valve 7 is driven to be opened and closed. The exhaust valve 7 is urged by an upper spring 208 in the valve opening direction, and is urged by a lower spring 209 in the valve closing direction. Thus, when the magnetic force of the close drive electromagnet 201 and the open drive electromagnet 202 is not operating, the exhaust valve 7 is in a half-open state as shown in FIG. 19. In the valve gear 8 of FIG. 20, when the exhaust valve 7 is opened at the time of the exhaust process, current is supplied to the lower coil 206, and supply of current to the upper coil 204 is stopped, so that the full lift of the exhaust valve 7 is executed. When the exhaust valve 7 is opened at the time of the compression process in order to generate reforming gas, for example, current supplied to the upper coil 204 is decreased so as to execute the small lift of the exhaust valve 7. In this manner, by regulating current to execute the small lift of the exhaust valve 7, fuel whose temperature is increased in the compression process can be introduced into the reforming catalyst before it is burnt.

The valve gear 8 of FIG. 21 is provided with a cam 301, a locker arm 302, and an actuator 303. The cam 301 is for example driven by a crank shaft of an engine. On the cam 301, a nose 301a is disposed such that an exhaust valve 7 is driven to be opened/closed at a predetermined timing at the time of the exhaust process. The locker arm 302 is provided rotatably about a fulcrum 302a, and one end 302b abuts the exhaust valve 7. The actuator 303 is provided so as to be capable of pressing upwardly other end 302c of the locker arm 302 in an arrow I direction. The operation of the actuator 303 is controlled by an unillustrated ECU 10. In the valve gear 8 of FIG. 21, the cam 301 rotates, and the nose 301a presses downwardly the locker arm 302 in an arrow J direction, so that the exhaust valve 7 is driven to be opened/closed at a predetermined timing at the time of the exhaust process. When the exhaust valve 7 is opened at the time of the exhaust process in order to generate reforming gas, the actuator 303 is operated, and the other end 302c is pressed upwardly in the arrow I direction. Since the locker arm 302 is provided so as to be rotatable about the fulcrum 302a, by allowing the other end 302c to be pressed upwardly in the G direction, the one end 302b moves in the J direction to open the exhaust valve 7. The lift amount of the exhaust valve 7 is regulated by the amount of pressing the other end 302c upwardly by the actuator 303.

## Claims

1. A fuel reforming method of an internal combustion engine (1) in which fuel is supplied to a reforming catalyst (4) provided on an exhaust path (3) so that the fuel is reformed to a reforming gas,
**characterized by** comprising:
a discharging step (S15) in which fuel supplied into a cylinder (2) and whose temperature is increased by a compression process is discharged by opening an exhaust valve (7) before the fuel is burnt; and
a reforming step (S15) in which the discharged fuel is introduced to the reforming catalyst (4).

2. The fuel reforming method of the internal combustion engine according to claim 1, further comprising a fuel supplying step (S14) in which fuel is supplied to the cylinder (2) such that an appropriate amount of fuel by which the reforming catalyst (4) exhibits a fuel reforming characteristic is discharged from the cylinder (2) in the discharging step (S15).

3. The fuel reforming method of the internal combustion engine according to claim 1 or 2, wherein the discharging step (S15) is executed when the internal combustion engine (1) is operated at a low load at which a required torque required at the internal combustion engine (1) becomes approximately zero.

4. The fuel reforming method of the internal combustion engine according to claim 1 or 2, wherein the discharging step (S15) is executed at a time of speed reduction of the internal combustion engine (1).

5. The fuel reforming method of the internal combustion engine according to any one of claims 1 to 4, further comprising
a rich spike operation (S15; S21) in which the reforming gas is supplied to an exhaust purifying catalyst (5) provided on the exhaust path (3) downstream of the reforming catalyst (4) to recover the function of the exhaust purifying catalyst (5) by a rich spike in which an air-to-fuel ratio of exhaust is temporarily set to a rich side.

6. The fuel reforming method of the internal combustion engine according to claim 5, further comprising
a storing step (S22) in which the reforming gas is stored by storing means (11) at the time of the reforming step (S15), wherein
the reforming gas is supplied from the storing means (11) to the exhaust purifying catalyst (5) at the time of the rich spike operation (S21).

7. The fuel reforming method of the internal combustion engine according to claim 6, further comprising
a particle material removal operation (S32, S41) in which the temperature of the exhaust purifying catalyst (5) is increased to a temperature range in which a particle material adhering to the exhaust purifying catalyst (5) is oxidized and removed by supplying the reforming gas from the storing means (11) to the exhaust purifying catalyst (5) to recover the function of the exhaust purifying catalyst (5) by removal of the particle material.

8. The fuel reforming method of the internal combustion engine according to claim 7, wherein the particle material removal operation (S41) comprises a temperature increasing step in which the reforming gas is supplied from the storing means (11) to the exhaust purifying catalyst (5) and thereafter fuel is added from a fuel supplying system of the internal combustion engine (1).

9. The fuel reforming method of the internal combustion engine according to claim 8, wherein the supply amount of the reforming gas supplied from the storing means (11) is decreased at the time of fuel supply, and the amount of fuel added to the exhaust purifying catalyst (5) is increased in accordance with the decrease of the supply amount of the reforming gas.

10. The fuel reforming method of the internal combustion engine according to claim 7, wherein the particle material removal operation (S41) comprises a temperature increasing step in which fuel is added from a fuel supplying system of the internal combustion engine (1) in order to increase the temperature of the exhaust purifying catalyst (5), and a temperature regulation step in which the reforming gas is supplied from the storing means (11) to a place of the exhaust purifying catalyst (5) whose temperature is low in order to restrain a temperature distribution of the exhaust purifying catalyst (5).

11. The fuel reforming method of the internal combustion engine according to claim 7, wherein the particle material removal operation (S41) comprises a temperature increasing step in which the reforming gas stored in the storing means (11) and fuel added from a fuel supplying system of the internal combustion engine (1) are supplied to the exhaust purifying catalyst (5) to increase the temperature thereof, and a supply amount regulation step in which the lower the temperature of exhaust flowing into the exhaust purifying catalyst at the time of the temperature increasing step is, the more the amount of the reforming gas supplied to the exhaust purifying catalyst (5) is increased.

12. The fuel reforming method of the internal combustion engine according to claim 7, wherein the particle material removal operation (S41) comprises a temperature increasing step in which the reforming gas stored in the storing means (11) and fuel added from a fuel supplying system of the internal combustion engine (1) are supplied to the exhaust purifying catalyst (5) to increase the temperature thereof, and a supply amount regulation step in which the higher the space velocity in the exhaust purifying catalyst (5) at the time of the temperature increasing step is, the more the amount of the reforming gas supplied to the exhaust purifying catalyst (5) is increased.

13. The fuel reforming method of the internal combustion engine according to claim 7, wherein the particle material removal operation (S41) comprises a temperature increasing step in which a fixed flow volume of the reforming gas is supplied from the storing means (11) to the exhaust purifying catalyst (5), and a temperature regulation step in which fuel is added from a fuel supplying system of the internal combustion engine (1) to the exhaust purifying catalyst (5) such that a temperature distribution of the exhaust purifying catalyst (5) is restrained.

14. A fuel reforming device of an internal combustion engine (1) in which a reforming catalyst (4) for reforming fuel to a reforming gas is provided on an exhaust path (3), **characterized by** comprising:
valve opening means (8, 50) capable of opening an exhaust valve (7) at a time other than an exhaust process time; and
operation control means (10) for controlling the operation of the valve opening means (8, 50) to open the exhaust valve (7) in order to execute the discharging step (S15) defined in claim 1 or any dependent claim.

15. The fuel reforming device of the internal combustion engine according to claim 14, wherein the operation control means (10) is adapted to control fuel supplying means (6) for supplying fuel to the engine (1) in order to execute the fuel supplying step (S15) defined in claim 2 or any dependent claim.

16. The fuel reforming device of the internal combustion engine according to claim 14 or 15, further comprising:
storing means (11) for storing the reforming gas;
leading means (12, 13, 30) for introducing the reforming gas into the storing means (11); and
supplying means (12, 30) for supplying the reforming gas stored in the storing means (11) to an exhaust purifying catalyst (5) provided on the exhaust path (3) downstream of the reforming catalyst (4) and whose function is recovered by a rich spike operation in which an air-to-fuel ratio of exhaust is temporarily set to a rich side,
wherein the operation control means (10) is adapted to effect the rich spike operation for the exhaust purifying catalyst (5) by supplying the reforming gas from the storing means (11) to the exhaust purifying catalyst (5).

17. The fuel reforming device of the internal combustion engine according to claim 16, wherein the operation control means (10) is adapted to control, at the time of the rich spike operation, fuel addition means (17) for adding fuel to the exhaust purifying catalyst (5) from a fuel supplying system of the internal combustion engine (1).

18. The fuel reforming device of the internal combustion engine according to any one of claims 14 to 17, further comprising
a bypass path (40) bypassing the reforming catalyst (4); and
valve means (41) capable of switching the flow of gas discharged from a cylinder (2) of the internal combustion engine (1) between the reforming catalyst (4) and the bypass path (40),
wherein the operation control means (10) is adapted to control the operation of the valve means (41) such that gas discharged from the cylinder (2) is introduced into the bypass path (40) at a time other than the time when the exhaust valve (7) is opened by the valve opening means (8, 50).

19. The fuel reforming device of the internal combustion engine according to any one of claims 14 to 18, wherein
the internal combustion engine (1) has four cylinders (2);
the exhaust path (3) has branched portions (3a) which branch off for each cylinder (2) of the internal combustion engine (1); and
the reforming catalyst (4) is arranged on a branched portion of any one cylinder (2) among the four cylinders (2).

20. The fuel reforming device of the internal combustion engine according to any one of claims 14 to 18, wherein
the internal combustion engine (1) has six or eight cylinders (2);
the exhaust path (3) has branched portions (3a) which branch off for each cylinder (2) of the internal combustion engine (1); and
the reforming catalyst (4) is arranged on the branched portions (3a) of any two cylinders (2) among the six or eight cylinders (2).

21. The fuel reforming device of the internal combustion engine according to any one of claims 14 to 18, wherein
the internal combustion engine (1) has a plurality of cylinders (2) ;
the exhaust path (3) has branched portions (3a) which branch off for each cylinder (2) of the internal combustion engine (1);
the reforming catalyst (4) is arranged on each of the branched portions (3a); and
the operation control means (10) is adapted to control the operation of the valve opening means (8, 50) to open the exhaust valve (7) such that fuel whose temperature is increased in the compression process is introduced into the reforming catalyst (4) before the fuel is burnt at a rate of one time per three times or one time per four times of the compression process execution of the internal combustion engine (1).

## Patentansprüche

1. Brennstoffreformierverfahren einer Brennkraftmaschine (1), bei dem einem Reformierkatalysator (4), der sich auf einem Abgasweg (3) befindet, Brennstoff zugeführt wird, so dass der Brennstoff zu einem Reformiergas reformiert wird,
**gekennzeichnet durch**:
einen Abgabeschritt (S15), in dem Brennstoff, der in einen Zylinder (2) eingespeist wird und dessen Temperatur **durch** einen Verdichtungsvorgang erhöht wird, **durch** Öffnen eines Auslassventils (7) abgegeben wird, bevor der Brennstoff verbrannt wird; und
einen Reformierschritt (S15), in dem der abgegebene Brennstoff in den Reformierkatalysator (4) eingeleitet wird.

2. Brennstoffreformierverfahren der Brennkraftmaschine nach Anspruch 1, mit außerdem einem Brennstoffzuführschritt (S14), in dem dem Zylinder (2) derart Brennstoff zugeführt wird, dass im Abgabeschritt (S15) aus dem Zylinder (2) eine passende Menge Brennstoff abgegeben wird, durch die der Reformierkatalysator (4) eine Brennstoffreformiercharakteristik zeigt.

3. Brennstoffreformierverfahren der Brennkraftmaschine nach Anspruch 1 oder 2, wobei der Abgabeschritt (S15) erfolgt, wenn die Brennkraftmaschine (1) bei einer geringen Last betrieben wird, bei der ein nötiges Drehmoment, das an der Brennkraftmaschine (1) benötigt wird, ungefähr null wird.

4. Brennstoffreformierverfahren der Brennkraftmaschine nach Anspruch 1 oder 2, wobei der Abgabeschritt (S15) zum Zeitpunkt einer Drehzahlsenkung der Brennkraftmaschine (1) erfolgt.

5. Brennstoffreformierverfahren der Brennkraftmaschine nach einem der Ansprüche 1 bis 4, mit außerdem
einem Fettimpuls-Betrieb (S15; S21), bei dem das Reformiergas einem Abgasreinigungskatalysator (5) zugeführt wird, der sich auf dem Abgasweg (3) stromabwärts vom Reformierkatalysator (4) befindet, um die Funktion des Abgasreinigungskatalysators (5) durch einen Fettimpuls wiederherzustellen, bei dem ein Luft-Brennstoff-Verhältnis von Abgas vorübergehend zu einer fetten Seite eingestellt ist.

6. Brennstoffreformierverfahren der Brennkraftmaschine nach Anspruch 5, mit außerdem
einem Speicherschritt (S22), in dem das Reformiergas zum Zeitpunkt des Reformierschritts (S15) durch eine Speichereinrichtung (11) gespeichert wird, wobei
das Reformiergas dem Abgasreinigungskatalysator (5) zum Zeitpunkt des Fettimpuls-Betriebs (S21) aus der Speichereinrichtung (11) zugeführt wird.

7. Brennstoffreformierverfahren der Brennkraftmaschine nach Anspruch 6, mit außerdem
einem Teilchenmaterial-Entfernungsvorgang (S32, S41), bei dem die Temperatur des Abgasreinigungskatalysators (5) auf einen Temperaturbereich erhöht wird, in dem ein am Abgasreinigungskatalysator (5) anhaftendes Teilchenmaterial oxidiert und entfernt wird, indem dem Abgasreinigungskatalysator (5) das Reformiergas aus der Speichereinrichtung (11) zugeführt wird, um die Funktion des Abgasreinigungskatalysators (5) durch Entfernung des Teilchenmaterials wiederherzustellen.

8. Brennstoffreformierverfahren der Brennkraftmaschine nach Anspruch 7, wobei der Teilchenmaterial-Entfernungsvorgang (S41) einen Temperaturerhöhungsschritt umfasst, in dem dem Abgasreinigungskatalysator (5) das Reformiergas aus der Speichereinrichtung (11) zugeführt wird und danach Brennstoff aus einem Brennstoffzuführsystem der Brennkraftmaschine (1) zugefügt wird.

9. Brennstoffreformierverfahren der Brennkraftmaschine nach Anspruch 8, wobei die Zufuhrmenge des aus der Speichereinrichtung (11) zugeführten Reformiergases zum Zeitpunkt der Brennstoffzufuhr verringert wird und die Menge an Brennstoff, die dem Abgasreinigungskatalysator (5) zugefügt wird, entsprechend der Abnahme der Zufuhrmenge des Reformiergases erhöht wird.

10. Brennstoffreformierverfahren der Brennkraftmaschine nach Anspruch 7, wobei der Teilchenmaterial-Entfernungsvorgang (S41) einen Temperaturerhöhungsschritt, in dem Brennstoff aus einem Brennstoffzuführsystem der Brennkraftmaschine (1) zugefügt wird, um die Temperatur des Abgasreinigungskatalysators (5) zu erhöhen, und einen Temperatur-Regulierungsschritt umfasst, in dem das Reformiergas aus der Speichereinrichtung (11) einer Stelle des Abgasreinigungskatalysators (5) zugeführt wird, deren Temperatur gering ist, um eine Temperaturverteilung des Abgasreinigungskatalysators (5) einzuschränken.

11. Brennstoffreformierverfahren der Brennkraftmaschine nach Anspruch 7, wobei der Teilchenmaterial-Entfernungsvorgang (S41) einen Temperaturerhöhungsschritt, in dem dem Abgasreinigungskatalysator (5) das in der Speichereinrichtung (11) gespeicherte Reformiergas und Brennstoff, der aus einem Brennstoffzuführsystem der Brennkraftmaschine (1) zugefügt wird, zugeführt werden, um dessen Temperatur zu erhöhen, und einen Zufuhrmengen-Regulierungsschritt umfasst, in dem die Menge des dem Abgasreinigungskatalysator (5) zugeführten Reformiergases umso mehr erhöht wird, je geringer zum Zeitpunkt des Temperaturerhöhungsschritts die Temperatur von Abgas ist, das in den Abgasreinigungskatalysator strömt.

12. Brennstoffreformierverfahren der Brennkraftmaschine nach Anspruch 7, wobei der Teilchenmaterial-Entfernungsvorgang (S41) einen Temperaturerhöhungsschritt, in dem dem Abgasreinigungskatalysator (5) das in der Speichereinrichtung (11) gespeicherte Reformiergas und Brennstoff, der aus einem Brennstoffzuführsystem der Brennkraftmaschine (1) zugefügt wird, zugeführt werden, um dessen Temperatur zu erhöhen, und einen Zufuhrmengen-Regulierungsschritt umfasst, in dem die Menge des dem Abgasreinigungskatalysator (5) zugeführten Reformiergases umso mehr erhöht wird, je höher zum Zeitpunkt des Temperaturerhöhungsschritts die Raumgeschwindigkeit im Abgasreinigungskatalysator (5) ist.

13. Brennstoffreformierverfahren der Brennkraftmaschine nach Anspruch 7, wobei der Teilchenmaterial-Entfernungsvorgang (S41) einen Temperaturerhöhungsschritt, in dem dem Abgasreinigungskatalysator (5) aus der Speichereinrichtung (11) ein festgelegtes Durchflussvolumen des Reformiergases zugeführt wird, und einen Temperatur-Regulierungsschritt umfasst, in dem dem Abgasreinigungskatalysator (5) aus einem Brennstoffzuführsystem der Brennkraftmaschine (1) derart Brennstoff zugefügt wird, dass eine Temperaturverteilung des Abgasreinigungskatalysators (5) eingeschränkt wird.

14. Brennstoffreformiervorrichtung einer Brennkraftmaschine (1), in der sich auf einem Abgasweg (3) ein Reformierkatalysator (4) zum Reformieren vom Brennstoff zu einem Reformiergas befindet, **gekennzeichnet durch**:
eine Ventilöffnungseinrichtung (8, 50), die dazu in der Lage ist, ein Auslassventil (7) zu einem anderen Zeitpunkt als einem Auslassvorgangszeitpunkt zu öffnen; und
eine Betriebssteuerungseinrichtung (10) zum Steuern des Betriebs der Ventilöffnungseinrichtung (8, 50), um das Auslassventil (7) zu öffnen, damit der im Anspruch 1 oder einem der abhängigen Ansprüche definierte Abgabeschritt (S15) ausgeführt wird.

15. Brennstoffreformiervorrichtung der Brennkraftmaschine nach Anspruch 14, wobei die Betriebssteuerungseinrichtung (10) daran angepasst ist, eine Brennstoffzuführeinrichtung (6) zum Zuführen von Brennstoff zur Maschine (1) zu steuern, damit der im Anspruch 2 oder einem der abhängigen Ansprüche definierte Brennstoffzuführschritt (S15) ausgeführt wird.

16. Brennstoffreformiervorrichtung der Brennkraftmaschine nach Anspruch 14 oder 15, mit außerdem:
einer Speichereinrichtung (11) zum Speichern des Reformiergases;
einer Leiteinrichtung (12, 13, 30) zum Einleiten des Reformiergases in die Speichereinrichtung (11); und
einer Zuführeinrichtung (12, 30) zum Zuführen des in der Speichereinrichtung (11) gespeicherten Reformiergases zu einem Abgasreinigungskatalysator (5), der sich auf dem Abgasweg (3) stromabwärts vom Reformierkatalysator (4) befindet und dessen Funktion durch einen Fettimpuls-Betrieb wiederhergestellt wird, bei dem ein Luft-Brennstoff-Verhältnis von Abgas vorübergehend zu einer fetten Seite eingestellt ist,
wobei die Betriebssteuerungseinrichtung (10) daran angepasst ist, den Fettimpuls-Betrieb für den Abgasreinigungskatalysator (5) zu bewirken, indem dem Abgasreinigungskatalysator (5) das Reformiergas aus der Speichereinrichtung (11) zugeführt wird.

17. Brennstoffreformiervorrichtung der Brennkraftmaschine nach Anspruch 16, wobei die Betriebssteuerungseinrichtung (10) daran angepasst ist, zum Zeitpunkt des Fettimpuls-Betriebs eine Brennstoffzufügungseinrichtung (17) zum Zufügen von Brennstoff zum Abgasreinigungskatalysator (5) aus einem Brennstoffzuführsystem der Brennkraftmaschine (1) zu steuern.

18. Brennstoffreformiervorrichtung der Brennkraftmaschine nach einem der Ansprüche 14 bis 17, mit außerdem
einem Umgehungsweg (40), der den Reformierkatalysator (4) umgeht; und
einer Ventileinrichtung (41), die dazu in der Lage ist, die Strömung eines aus einem Zylinder (2) der Brennkraftmaschine (1) abgegebenen Gases zwischen dem Reformierkatalysator (4) und dem Umgehungsweg (40) umzuschalten,
wobei die Betriebssteuerungseinrichtung (10) daran angepasst ist, den Betrieb der Ventileinrichtung (41) derart zu steuern, dass das aus dem Zylinder (2) abgegebene Gas zu einem anderen Zeitpunkt als dem Zeitpunkt, wenn das Abgasventil (7) durch die Ventilöffnungseinrichtung (8, 50) geöffnet wird, in den Umgehungsweg (40) eingeleitet wird.

19. Brennstoffreformiervorrichtung der Brennkraftmaschine nach einem der Ansprüche 14 bis 18, wobei
die Brennkraftmaschine (1) vier Zylinder (2) hat;
der Abgasweg (3) Abzweigabschnitte (3a) hat, die für jeden Zylinder (2) der Brennkraftmaschine (1) abzweigen; und
der Reformierkatalysator (4) auf einem Abzweigabschnitt eines beliebigen Zylinders (2) der vier Zylinder (2) angeordnet ist.

20. Brennstoffreformiervorrichtung der Brennkraftmaschine nach einem der Ansprüche 14 bis 18, wobei
die Brennkraftmaschine (1) sechs oder acht Zylinder (2) hat;
der Abgasweg (3) Abzweigabschnitte (3a) hat, die für jeden Zylinder (2) der Brennkraftmaschine (1) abzweigen; und
der Reformierkatalysator (4) auf den Abzweigabschnitten (3a) von beliebigen zwei Zylindern (2) der sechs oder acht Zylinder (2) angeordnet ist.

21. Brennstoffreformiervorrichtung der Brennkraftmaschine nach einem der Ansprüche 14 bis 18, wobei
die Brennkraftmaschine (1) eine Vielzahl von Zylindern (2) hat; der Abgasweg (3) Abzweigabschnitte (3a) hat, die für jeden Zylinder (2) der Brennkraftmaschine (1) abzweigen;
der Reformierkatalysator (4) auf jedem der Abzweigabschnitte (3a) angeordnet ist; und
die Betriebssteuerungseinrichtung (10) daran angepasst ist, den Betrieb der Ventilöffnungseinrichtung (8, 50) mit einer Frequenz von alle drei Mal oder alle vier Mal der Verdichtungsvorgangsausführung der Brennkraftmaschine (1) so zu steuern, dass das Abgasventil (7) derart geöffnet wird, dass Brennstoff, dessen Temperatur im Verdichtungsvorgang erhöht wird, in den Reformierkatalysator (4) eingeleitet wird, bevor der Brennstoff verbrannt wird.

## Revendications

1. Procédé de reformation de carburant d'un moteur à combustion interne (1) dans lequel du carburant est délivré à un catalyseur de reformation (4) prévu sur un passage d'échappement (3) de telle sorte que du carburant est reformé en un gaz de reformation,
**caractérisé en ce qu'**il comporte :
une étape de décharge (S15) dans laquelle du carburant délivré dans un cylindre (2) et dont la température est augmentée par un processus de compression est déchargé en ouvrant une soupape d'échappement (7) avant que le carburant soit brûlé ; et
une étape de reformation (S15) dans laquelle le carburant déchargé est introduit dans le catalyseur de reformation (4).

2. Procédé de reformation de carburant d'un moteur à combustion interne selon la revendication 1, comportant en outre une étape d'alimentation en carburant (S14) dans laquelle du carburant est délivré au cylindre (2) de telle sorte qu'une quantité de carburant appropriée grâce à laquelle le catalyseur de reformation (4) présente une caractéristique de reformation de carburant est déchargée du cylindre (2) dans l'étape de décharge (S15).

3. Procédé de reformation de carburant d'un moteur à combustion interne selon la revendication 1 ou 2, selon lequel l'étape de décharge (S15) est exécutée quand le moteur à combustion interne (1) fonctionne à une faible charge pour laquelle un couple exigé dans le moteur à combustion interne (1) devient approximativement nul.

4. Procédé de reformation de carburant d'un moteur à combustion interne selon la revendication 1 ou 2, selon lequel l'étape de décharge (S15) est exécutée à un moment de réduction de vitesse du moteur à combustion interne (1).

5. Procédé de reformation de carburant d'un moteur à combustion interne selon l'une quelconque de revendications 1 à 4, comportant en outre
un fonctionnement de pointe riche (S15 ; S21) dans lequel le gaz de reformation est délivré à un catalyseur de purification d'échappement (5) prévu sur le passage d'échappement (3) en aval du catalyseur de reformation (4) afin de récupérer la fonction du catalyseur de purification d'échappement (5) grâce à une pointe de richesse dans laquelle un rapport air-carburant d'échappement est temporairement réglé d'un côté riche.

6. Procédé de reformation de carburant d'un moteur à combustion interne selon la revendication 5, comportant en outre
une étape de stockage (S22) dans laquelle le gaz de reformation est stocké par des moyens de stockage (11) au moment de l'étape de reformation (S15), selon lequel
le gaz de reformation est délivré à partir des moyens de stockage (11) au catalyseur de purification d'échappement (5) au moment du fonctionnement de pointe riche (S21).

7. Procédé de reformation de carburant d'un moteur à combustion interne selon la revendication 6, comportant en outre
une opération d'élimination de matière en particules (S32, S41) dans laquelle la température du catalyseur de purification d'échappement (5) est augmentée jusqu'à une plage de températures dans laquelle une matière en particules adhérant au catalyseur de purification d'échappement (5) est oxydée et éliminé en délivrant le gaz de reformation à partir des moyens de stockage (11) au catalyseur de purification d'échappement (5) afin de récupérer la fonction du catalyseur de purification d'échappement (5) par élimination de la matière en particules.

8. Procédé de reformation de carburant d'un moteur à combustion interne selon la revendication 7, selon lequel l'opération d'élimination de matière en particules (S41) comporte une étape d'augmentation de température dans laquelle le gaz de reformation est délivré à partir des moyens de stockage (11) au catalyseur de purification d'échappement (5) et ensuite du carburant est ajouté à partir d'un système d'alimentation en carburant du moteur à combustion interne (1).

9. Procédé de reformation de carburant d'un moteur à combustion interne selon la revendication 8, selon lequel la quantité d'alimentation du gaz de reformation délivré à partir des moyens de stockage (11) est diminuée au moment de l'alimentation en carburant, et la quantité de carburant ajoutée au catalyseur de purification d'échappement (5) est augmentée en fonction de la diminution de la quantité d'alimentation du gaz de reformation.

10. Procédé de reformation de carburant d'un moteur à combustion interne selon la revendication 7, selon lequel l'opération d'élimination de matière en particules (S41) comporte une étape d'augmentation de température dans laquelle du carburant est ajouté à partir d'un système d'alimentation en carburant du moteur à combustion interne (1) afin d'augmenter la température du catalyseur de purification d'échappement (5), et une étape de régulation de température dans laquelle le gaz de reformation est délivré à partir des moyens de stockage (11) à un emplacement du catalyseur de purification d'échappement (5) dont la température est basse afin de limiter une distribution de température du catalyseur de purification d'échappement (5).

11. Procédé de reformation de carburant d'un moteur à combustion interne selon la revendication 7, selon lequel l'opération d'élimination de matière en particules (S41) comporte une étape d'augmentation de température dans laquelle le gaz de reformation stocké dans les moyens de stockage (11) et du carburant ajouté à partir d'un système d'alimentation en carburant du moteur à combustion interne (1) sont délivrés au catalyseur de purification d'échappement (5) afin d'augmenter sa température, et une étape de régulation de quantité d'alimentation dans laquelle plus la température d'échappement s'écoulant dans le catalyseur de purification d'échappement au moment de l'étape d'augmentation de température est basse, plus la quantité de gaz de reformation délivrée au catalyseur de purification d'échappement (5) est augmentée.

12. Procédé de reformation de carburant d'un moteur à combustion interne selon la revendication 7, selon lequel l'opération d'élimination de matière en particules (S41) comporte une étape d'augmentation de température dans laquelle le gaz de reformation stocké dans les moyens de stockage (11) et du carburant ajouté à partir d'un circuit d'alimentation du moteur à combustion interne (1) sont délivrés au catalyseur de purification d'échappement (5) afin d'augmenter sa température, et une étape de régulation de quantité d'alimentation dans laquelle plus la vitesse d'espace dans le catalyseur de purification d'échappement (5) au moment de l'étape d'augmentation de température est grande, plus la quantité du gaz de reformation délivrée au catalyseur de purification d'échappement (5) est augmentée.

13. Procédé de reformation de carburant d'un moteur à combustion interne selon la revendication 7, selon lequel l'opération d'élimination de matière en particules (S41) comporte une étape d'augmentation de température dans laquelle un volume d'écoulement fixe du gaz de reformation est délivré à partir des moyens de stockage (11) au catalyseur de purification d'échappement (5), et une étape de régulation de température dans laquelle du carburant est ajouté à partir d'un système d'alimentation en carburant du moteur à combustion interne (1) au catalyseur de purification d'échappement (5) de telle sorte qu'une distribution de température du catalyseur de purification d'échappement (5) est limitée.

14. Dispositif de reformation de carburant d'un moteur à combustion interne (1) dans lequel un catalyseur de reformation (4) destiné à reformer du carburant en un gaz de reformation est prévu sur un passage d'échappement (3), **caractérisé en ce qu'**il comporte :
des moyens d'ouverture de soupape (8, 50) capables d'ouvrir une soupape d'échappement (7) à un instant autre qu'un instant de processus d'échappement ; et
des moyens de commande de fonctionnement (10) destinés à commander le fonctionnement des moyens d'ouverture de soupape (8, 50) afin d'ouvrir la soupape d'échappement (7) de façon à exécuter l'étape de décharge (S15) définie dans la revendication 1 ou n'importe quelle revendication dépendante.

15. Dispositif de reformation de carburant du moteur à combustion interne selon la revendication 14, dans lequel les moyens de commande de fonctionnement (10) sont prévus pour commander des moyens d'alimentation en carburant (6) afin de délivrer du carburant au moteur (1) de façon à exécuter l'étape d'alimentation en carburant (S15) définie dans la revendication 2 ou n'importe quelle revendication dépendante.

16. Dispositif de reformation de carburant du moteur à combustion interne selon la revendication 14 ou 15, comportant en outre :
des moyens de stockage (11) destinés à stocker le gaz de reformation ;
des moyens d'avance (12, 13, 30) destinés à introduire le gaz de reformation dans les moyens de stockage (11) ; et
des moyens d'alimentation (12, 30) destinés à délivrer le gaz de reformation stocké dans les moyens de stockage (11) à un catalyseur de purification d'échappement (5) prévu sur le passage d'échappement (3) en aval du catalyseur de reformation (4) et dont la fonction est récupérée par un fonctionnement de pointe riche dans lequel un rapport air-carburant d'échappement est temporairement réglé sur un côté riche,
les moyens de commande de fonctionnement (10) étant prévus pour effectuer le fonctionnement de pointe riche pour le catalyseur de purification d'échappement (5) en délivrant le gaz de reformation à partir des moyens de stockage (11) au catalyseur de purification d'échappement (5).

17. Dispositif de reformation de carburant du moteur à combustion interne selon la revendication 16, selon lequel les moyens de commande de fonctionnement (10) sont prévus pour commander, au moment du fonctionnement de pointe riche, des moyens d'ajout de carburant (17) destinés à ajouter du carburant au catalyseur de purification d'échappement (5) à partir d'un système d'alimentation en carburant du moteur à combustion interne (1).

18. Dispositif de reformation de carburant du moteur à combustion interne selon l'une quelconque des revendications 14 à 17, comportant en outre
un passage de dérivation (40) contournant le catalyseur de reformation (4) ; et
des moyens de soupape (41) capables de commuter l'écoulement du gaz déchargé d'un cylindre (2) du moteur à combustion interne (1) entre le catalyseur de reformation (4) et le passage de dérivation (40),
les moyens de commande de fonctionnement (10) étant prévus pour commander le fonctionnement des moyens de soupape (41) de telle sorte que le gaz déchargé du cylindre (2) est introduit dans le passage de dérivation (40) à un instant autre que l'instant où la soupape d'échappement (7) est ouverte par les moyens d'ouverture de soupape (8, 50).

19. Dispositif de reformation de carburant du moteur à combustion interne selon l'une quelconque des revendications 14 à 18, dans lequel
le moteur à combustion interne (1) a quatre cylindres (2) ;
le passage d'échappement (3) a des parties d'embranchement (3a) qui s'embranchent pour chaque cylindre (2) du moteur à combustion interne (1) ; et
le catalyseur de reformation (4) est prévu sur une partie d'embranchement de n'importe quel cylindre (2) parmi les quatre cylindres (2).

20. Dispositif de reformation de carburant du moteur à combustion interne selon l'une quelconque des revendications 14 à 18, dans lequel
le moteur à combustion interne (1) a six ou huit cylindres (2) ;
le passage d'échappement (3) a des parties d'embranchement (3a) qui s'embranchent pour chaque cylindre (2) du moteur à combustion interne (1) ; et
le catalyseur de reformation (4) est prévu sur les parties d'embranchement (3a) de deux cylindres quelconques (2) parmi les six ou huit cylindres (2).

21. Dispositif de reformation de carburant du moteur à combustion interne selon l'une quelconque des revendications 14 à 18, dans lequel
le moteur à combustion interne (1) a une pluralité de cylindres (2) ;
le passage d'échappement (3) a des parties d'embranchement (3a) qui s'embranchent pour chaque cylindre (2) du moteur à combustion interne (1) ;
le catalyseur de reformation (4) est prévu sur chacune des parties d'embranchement (3a) ; et
les moyens de commande de fonctionnement (10) sont prévus pour commander le fonctionnement des moyens d'ouverture de soupape (8, 50) afin d'ouvrir la soupape d'échappement (7) de telle sorte que du carburant dont la température est augmentée dans le processus de compression est introduit dans le catalyseur de reformation (4) avant que le carburant soit brûlé à un taux d'une fois pour trois fois ou d'une fois pour quatre fois l'exécution de processus de compression du moteur à combustion interne (1).
